(19) **Europäisches Patentamt**
**European Patent Office**
**Office européen des brevets**

(11) **EP 1 307 105 B1**

(12) **FASCICULE DE BREVET EUROPEEN**

(45) Date de publication et mention
de la délivrance du brevet:
**19.04.2006 Bulletin 2006/16**

(21) Numéro de dépôt: **01958183.4**

(22) Date de dépôt: **26.07.2001**

(51) Int Cl.:
*A21D 8/02* (2006.01)    *A21D 13/08* (2006.01)
*A23P 1/16* (2006.01)    *A23P 1/14* (2006.01)
*A23G 1/10* (2006.01)    *A23G 3/02* (2006.01)
*A23G 3/00* (2006.01)    *A23G 1/00* (2006.01)
*A23G 1/20* (2006.01)    *A23G 3/20* (2006.01)

(86) Numéro de dépôt international:
**PCT/FR2001/002449**

(87) Numéro de publication internationale:
**WO 2002/013618 (21.02.2002 Gazette 2002/08)**

(54) **PROCEDE DE FABRICATION D'UN PRODUIT ALIMENTAIRE AERE ET PRODUIT AINSI OBTENU**

VERFAHREN ZUR HERSTELLUNG VON BELÜFTETEM NAHRUNGSMITTEL UND DARAUS
ERHALTENE PRODUKTE

METHOD FOR OBTAINING AN AERATED FOOD PRODUCT AND RESULTING PRODUCT

(84) Etats contractants désignés:
**AT BE CH CY DE DK ES FI FR GB GR IE IT LI LU
MC NL PT SE TR**

(30) Priorité: **11.08.2000 FR 0010610**

(43) Date de publication de la demande:
**07.05.2003 Bulletin 2003/19**

(73) Titulaire: **COMPAGNIE GERVAIS DANONE**
**92300 Levallois Perret (FR)**

(72) Inventeurs:
• **AYMARD, Pierre**
**F-92160 ANTONY (FR)**
• **BELOUIN, François**
**F-91590 CERNY (FR)**
• **GOETHALS, René**
**B-2200 HERENTALS (BE)**
• **PILLARD, Laurent**
**56330 Pluvigner (FR)**
• **RABAULT, Jean-Luc**
**F-91650 BREUILLET (FR)**

(74) Mandataire: **Jacquard, Philippe Jean-Luc et al**
**Cabinet Orès**
**36, rue de St Pétersbourg**
**75008 Paris (FR)**

(56) Documents cités:
EP-A- 0 085 798          EP-A- 0 539 646
EP-A- 0 575 070          EP-A- 0 954 991
GB-A- 459 583            NL-C- 57 026
US-A- 2 082 313          US-A- 2 197 919
US-A- 3 542 270          US-A- 3 606 266
US-A- 3 637 402          US-A- 4 262 029
US-A- 4 272 558          US-A- 4 273 793
US-A- 4 282 263          US-A- 4 410 552
US-A- 4 889 738          US-A- 5 230 919

• **PATENT ABSTRACTS OF JAPAN vol. 012, no. 237
(C-509), 6 juillet 1988 (1988-07-06) -& JP 63 028355
A (LOTTE CO LTD), 6 février 1988 (1988-02-06)**
• **PATENT ABSTRACTS OF JAPAN vol. 013, no. 061
(C-567), 10 février 1989 (1989-02-10) & JP 63
251047 A (KANEBO LTD), 18 octobre 1988
(1988-10-18)**
• **PATENT ABSTRACTS OF JAPAN vol. 013, no. 061
(C-567), 10 février 1989 (1989-02-10) & JP 63
251048 A (KANEBO LTD), 18 octobre 1988
(1988-10-18)**
• **PATENT ABSTRACTS OF JAPAN vol. 012, no. 165
(C-496), 18 mai 1988 (1988-05-18) & JP 62 275648
A (MORINAGA & CO LTD), 30 novembre 1987
(1987-11-30)**
• **PATENT ABSTRACTS OF JAPAN vol. 013, no. 236
(C-602), 30 mai 1989 (1989-05-30) & JP 01 047345
A (MORINAGA & CO LTD), 21 février 1989
(1989-02-21)**

**Description**

La présente invention a pour objet un procédé de fabrication d'un produit alimentaire aéré.

Il est connu de fabriquer de tels produits en incorporant par foisonnement un gaz sous pression à un produit en phase liquide et en détendant ensuite le produit pour provoquer l'expansion du gaz.

D'une manière générale, lorsque le produit peut supporter un échauffement, on élève sa température afin de diminuer sa viscosité et de faciliter l'incorporation du gaz.

C'est ainsi qu'il est par exemple connu du brevet US 5,230,919 (PROCTER & GAMBLE) de fabriquer du beurre d'arachide aéré en chauffant une pâte de beurre d'arachide (émulsion d'eau dans la matière grasse) à une température comprise entre 60°C et 70°C et en injectant de l'azote entre 14 et 20 bars pour obtenir, après refroidissement et ensuite détente, un beurre d'arachide aéré dont 90% des bulles ont un diamètre inférieur à 150 microns.

Par contre, il existe toute une gamme de produits alimentaires, par exemple les chocolats (phase continue de matière grasse avec dispersion de particules de cacao et de cristaux de sucre) ou les pâtes crues (émulsion de matière grasse dans une phase aqueuse riche en sucres et en amidon) qui ne supportent pas un échauffement, sans modification de leurs propriétés.

Pour les produits correspondant à la dénomination de « chocolat », il est impératif de respecter une température de tempérage (comprise entre 25°C et 34°C suivant la formulation), faute de quoi il se produit un phénomène de blanchiment dû au beurre de cacao. Pour les pâtes crues, une température supérieure à environ 45°C à 50°C est susceptible de produire un phénomène de gélatinisation partielle.

Pour de tels produits, utiliser une augmentation de la température pour faciliter le foisonnement, que le gaz soit injecté ou non sous pression, est impossible ou bien implique une adaptation particulière du procédé.

C'est ainsi par exemple que le brevet US 5,238,698 (JACOBS SUCHARD AG) qui s'intéresse au cas du chocolat au lait dépourvu de saccharose, met en oeuvre une injection d'azote entre 6 et 8 bars dans un chocolat porté à 35°C, température à laquelle le chocolat est liquide, après quoi le chocolat est refroidi à 29°C dans une deuxième section où du gaz est de nouveau injecté, le chocolat étant ensuite refroidi à 27°C dans deux nouvelles sections, après quoi, dans deux dernières sections, le chocolat est de nouveau porté à 28,5-29°C pour obtenir la pré-cristallisation désirée (tempérage), puis le chocolat dont la pression est entre 1,2 et 3 bars est expansé pour obtenir un chocolat aéré déposé dans des moules.

Le procédé n'implique pas moins que la mise en oeuvre de six sections dont chacune est équipée d'éléments mélangeurs statiques, ceci à seule fin de permettre une incorporation de gaz sous pression dans le chocolat en phase liquide, tout en assurant le tempérage du chocolat.

Si on s'en tient au cas du chocolat, un autre procédé connu consiste dans le brevet US 3,542,270 (NESTLE) à maintenir à 33°C - 35°C une masse de chocolat fondu, à l'agiter vigoureusement dans un appareil de foisonnement et à le refroidir ensuite à une température comprise entre 27°C et 30°C avant de déposer dans une moule le chocolat ainsi aéré.

Les procédés décrits dans les deux brevets précités ne permettent pas d'obtenir une aération très poussée du chocolat.

C'est pourquoi les techniques actuellement mises en oeuvre industriellement pour la fabrication de chocolat aéré, impliquent l'application d'une dépression pus ou moins prononcée lors du moulage, afin d'augmenter l'expansion des bulles de gaz et d'augmenter le taux d'aération du produit final.

C'est ainsi par exemple que le brevet US 4,889,738 (MORINAGA) met en oeuvre une agitation vigoureuse d'un chocolat afin d'introduire de l'air dans celui-ci, après quoi le chocolat est placé dans un moule à pression de 8 Torr pour permettre à l'air de s'expanser jusqu'à obtenir un chocolat aéré dont l'air constitue la phase continue avec une densité comprise entre 0,23 et 0,48.

Une autre catégorie de produit alimentaire pour lesquels une augmentation de température ne peut être préconisée est celle des pâtes crues, qui sont des émulsions de matières grasses dans l'eau.

On remarquera qu'en toute rigueur, l'invention s'applique à des produits viscoélastiques dont la rhéologie peut être décrite de la manière suivante : à des contraintes inférieures à son seuil ou limite d'écoulement, le produit se comporte comme un solide (« viscosité infinie »). A des contraintes supérieures, il s'écoule avec une certaine viscosité que l'on peut mesurer. C'est de cette viscosité (notamment viscosité plastique $\beta$ de Casson qui s'exprime en Pa.s) qu'il est question ci-après. Le protocole analytique en est précisé ci-après. Un autre paramètre destiné à caractériser la viscosité est l'indice de consistance K qui s'exprime en $Pa.s^n$ .

Les techniques connues ne permettent d'obtenir un taux d'aération suffisant que par agitation vigoureuse de pâtes crues dont la viscosité est suffisamment faible (0,1 à 2 Pa.s). Il est également connu (procédé « cuiller ») de foisonner d'abord la partie la plus fluide d'une formule à base de blanc d'oeuf et d'ajouter à la mousse ainsi aérée les autres ingrédients, notamment la farine, dont l'effet sur la viscosité perturberait l'aération. Pour les pâtes crues plus visqueuses, une aération à l'aide d'un mélangeur dynamique classique (par exemple du type "MONDOMIX" ou "OAKES") ne permet pas d'obtenir un taux d'aération élevé et donc de fabriquer des produits qui, après cuisson, présentent un haut degré de moelleux.

Un but de l'invention est de permettre une aération d'un produit alimentaire sans avoir à en augmenter sa température.

Un autre but de l'invention est de permettre une aération de haute qualité d'un produit alimentaire ayant dans des conditions dynamiques une viscosité relativement élevée, et plus particulièrement un procédé qui permet d'obtenir un taux d'aération élevé pour un produit alimentaire ayant une viscosité relativement élevée, sans avoir à le mouler sous vide pour développer une alvéolation satisfaisante.

Un autre but de l'invention est un procédé de fabrication d'un produit alimentaire aéré qui soit relativement simple à mettre en oeuvre.

Un autre but de l'invention est un procédé de fabrication d'un produit alimentaire aéré qui permette d'en diminuer la teneur en matières grasses sans influer négativement sur ses propriétés organoleptiques.

Un autre but de l'invention est un procédé de fabrication de produits alimentaires aérés qui, lors de leur dépose, et avant toute évolution (notamment cristallisation et/ou cuisson) conservent globalement leur forme, ce qui évite en particulier la contrainte obligatoire d'un moulage.

Au moins un des buts précités est obtenu à l'aide d'un procédé continu de fabrication d'un produit alimentaire aéré, par dispersion et/ou dissolution sous pression d'un gaz dans un produit alimentaire comportant au moins une matière grasse, puis détente pour produire une aération, caractérisé en ce que ladite dispersion et/ou dissolution a lieu à une pression relative comprise entre 8 et 50 bars à une température inférieure ou égale à 50°C dans une installation de mélange et de transport présentant au moins un mélangeur statique, ladite composition alimentaire présentant à ladite température avant dispersion et/ou dissolution une viscosité plastique de Casson comprise entre 2 et 500 Pa.s et notamment entre 5 et 500 Pa.s, plus particulièrement entre 8 et 500 Pa.s, ou bien encore entre 20 et 500 Pa.s, et un seuil d'écoulement compris entre 2 et 300 Pa, et en ce qu'il met en oeuvre une dépose du produit alimentaire aéré sous forme de produits individuels, ou d'au moins une bande, dont la forme se conserve globalement, tant qu'une force n'est pas appliquée.

La limite d'écoulement peut être notamment entre 10 et 300 Pa, plus particulièrement entre 20 et 300 Pa ou bien encore entre 40 et 300 Pa.

De manière surprenante, on obtient une aération efficace du produit avec un taux élevé d'incorporation de gaz en dépit de la viscosité relativement élevée du produit et de la faible vitesse de cisaillement ("shear rate") procuré par le ou les mélangeurs statiques mis en oeuvre, grâce à une injection de gaz à une pression relativement élevée, tout en évitant donc un échauffement préjudiciable du produit.

Ceci va à l'encontre de l'état de la technique, qui enseigne que, pour incorporer un gaz à une pâte visqueuse, il faut l'agiter vigoureusement, ou bien encore que seuls des produits suffisamment fluides peuvent donner lieu à des taux d'aération élevés, sauf à mouler ensuite les produits sous vide pour leur alvéolation.

Ceci va également à l'encontre, tout du moins en ce qui concerne le chocolat, de l'enseignement du brevet US 5,238,698, qui dissuade d'employer des pressions supérieures à 8 bars en raison de la mauvaise texture qui devrait en résulter.

Ladite température peut être comprise entre 5°C et 50°C, et plus particulièrement entre 10°C et 40°C. Pour le chocolat, la gamme de température est avantageusement comprise entre 25°C et 34°C, en fonction de la température de tempérage de la composition particulière mise en oeuvre. Un chocolat tempéré est partiellement cristallisé avec 3 % à 4 % de cristaux. Pour des produits à base de chocolat tels que des fourrages au chocolat, ne contenant pas de beurre de cacao, la température peut être plus élevée, car, il n'y a pas lieu de procéder à un tempérage.

Par produit à base de chocolat, on entendra au sens de la présente Demande, des produits tels que le chocolat, qui contiennent du beurre de cacao en tant que matière grasse ou bien encore des produits dont la teneur en matières grasses provient seulement en partie de la présence de beurre de cacao, ou qui ne présentent pas du tout de beurre de cacao, le beurre de cacao pouvant être remplacé en tout ou partie par une matière grasse cristallisable ou non. Un produit cristallisé à base de chocolat contient une majeure partie de sa matière grasse qui est cristallisée. Un produit à base de chocolat peut contenir moins de 50% de sa matière sous forme cristallisée.

Le produit alimentaire peut être à base de chocolat, qui présente avantageusement une teneur pondérale en matière grasse (avec ou sans beurre de cacao) comprise entre 22 % et 40 %, et plus particulièrement entre 24 % et 38 %.

Selon une première variante, un produit à base de chocolat qui contient ou non du beurre de cacao est déposé sous forme de produits individuels. Avantageusement, on met en oeuvre un doseur volumétrique préférentiellement pourvu d'un coupe-fil de sorte que les produits individuels se présentent sous forme de produits à faces planes (galettes, parallépipèdes, croissants de lune, etc...), ce qui permet en particulier de déposer de tels produits sur des biscuits, avec recouvrement éventuel des galettes par un biscuit supérieur.

Alternativement, les produits individuels sont déposés à l'aide d'une vanne pointeau. Une telle vanne présente l'avantage de bien supporter la pression, d'assurer une chute de pression très rapide entre la tuyauterie amont et l'atmosphère, ce qui favorise l'expansion des bulles, et enfin elle évite une chambre de rétention après détente, ce qui évite de défoisonner la mousse.

Le dépôt ayant dans tous les cas lieu à une température à laquelle le chocolat contenu dans le produit n'est pas encore totalement cristallisé, la cristallisation ultérieure du chocolat permet une adhésion entre le chocolat alvéolé et le ou les biscuits.

En particulier, la force d'application du biscuit supérieur appuie les uns contre les autres les faces adjacentes des biscuits et de la galette ce qui facilite ultérieurement l'adhésion lors de la cristallisation du produit. Cette force d'appui tend à tasser légèrement la galette qui est auto-portante, c'est-à-dire qu'elle ne conserve sa forme que tant qu'elle n'est pas soumise à une force.

Selon une deuxième variante, le produit à base de chocolat est déposé à pression atmosphérique sous forme d'une bande par exemple, de largeur comprise entre 2mm et 10mm et de hauteur comprise entre 2mm et 5mm, et convoyé dans un tunnel de refroidissement fonctionnant dans des conditions industrielles standard. Avantageusement, après cristallisation de la matière grasse, la bande est découpée pour former des produits découpés ou "chunks" de longueur comprise entre 5mm et 15mm. L'état de surface du produit ainsi aéré est très comparable à celui d'un chocolat standard, notamment en ce qu'il reste lisse, brillant et conserve la même couleur.

De manière surprenante, les dimensions de la bande ont pour effet que les bulles de plus grand diamètre tendent à crever la surface et à disparaître, ce qui fait qu'après cristallisation sous forme de bande ou de pépites, le diamètre moyen des bulles est très notablement diminué par rapport à celui constaté dans le chocolat aéré lors de sa dépose.

L'invention permet en particulier de réaliser des produits à base de chocolat, de densité comprise entre 0,5 et 1, et plus particulièrement entre 0,5 et 0,7 ou encore entre 0,6 et 0,7. Il est néanmoins possible d'obtenir toute la gamme de densités comprises entre ces plages et la densité initiale du chocolat (environ 1,3) en mettant en oeuvre les paramètres appropriés, notamment le rapport entre le débit de gaz et le débit de chocolat.

Selon une troisième variante, le produit est déposé sous formes de pépites ("drops") en forme générale de gouttelettes à l'aide d'une vanne à pointeau, et envoyé dans un tunnel de froid opérant à pression atmosphérique.

Les "chunks" ou les "drops", que l'on ne savait pas jusqu'à présent fabriquer sous forme alvéolée, ont une densité qui est avantageusement comprise entre 0,6 et 1,1 , plus particulièrement entre 0,6 et 0,9 et de préférence entre 0,7 et 0,9.

Le produit alimentaire peut être une pâte crue à base de farine, notamment une génoise texturée. Cette pâte crue peut contenir des épaississants solubles à froid ou à chaud (guar, pectine, alginate, caroube et/ou carboxyméthylcellulose, etc...) et/ou des fibres dispersibles (gluten, fibres cellulosiques, etc...)

La pâte crue peut présenter, avant incorporation de gaz, une viscosité plastique de Casson β comprise entre 2 Pa.s et 500 Pa.s et plus particulièrement entre 5 Pa.s et 500 Pa.s ou bien encore entre 10 Pa.s et 500 Pa.s et de préférence entre 20 Pa.s et 500 Pa. s, et un seuil d'écoulement compris entre 2 et 300 Pa, et plus particulièrement entre 5 et 300 Pa.

Une fois déposée, la pâte est soumise à une étape de cuisson conduisant à une dilatation du gaz injecté qui, associé à la vaporisation de l'eau, donne un produit final, notamment une génoise, qui présente un moelleux remarquable.

Immédiatement après sa dépose et avant cristallisation et/ou cuisson, le produit alvéolé présente des propriétés caractéristiques, et notamment des propriétés mécaniques qui lui permettent de conserver globalement une forme donnée, tout en restant façonnable.

L'invention concerne également un produit alimentaire alvéolé obtenu par le procédé défini ci-dessus et comportant au moins une matière grasse, caractérisé en ce qu'au moins 80% des alvéoles ont une dimension comprise entre 0,1 mm et 1,5 mm, au moins 30% des alvéoles ayant un diamètre supérieur à 0,2 mm et en ce qu'il présente une viscosité plastique de Casson comprise entre 4 Pa.s. et 1000 Pa.s, notamment entre 10 et 1000 Pa.s, plus particulièrement entre 20 Pa.s et 1000 Pa.s ou bien encore entre 40 Pa.s et 1000 Pa.s et un seuil d'écoulement compris entre 10 Pa et 600 Pa, notamment entre 20 et 600 Pa, plus particulièrement entre 40 et 600 Pa, ou bien encore entre 80 et 600 Pa, de sorte qu'il présente une forme qui se conserve tant qu'une force de compression n'est pas appliquée.

Cette forme sera ensuite figée notamment par cristallisation en tunnel de froid à pression atmosphérique par exemple pour des produits à base de chocolat ou bien encore par cuisson (pâtes crues).

On notera que les valeurs de la viscosité plastique et du seuil d'écoulement obtenus après incorporation de gaz et dépose, sont supérieures à celles qui caractérisent le produit avant incorporation du gaz.

En particulier, 90% des alvéoles peuvent avoir un diamètre inférieur à 1,6 mm.

Le produit peut être à base de chocolat, et se présenter sous forme d'un produit aplati à faces parallèles, par exemple une galette, dans un état de cristallisation partielle de la matière grasse.

Le produit peut être caractérisé en ce qu'il est à base de chocolat et se présenter sous forme d'une bande de largeur comprise entre 2 mm et 10 mm, et de hauteur comprise entre 2 mm et 5 mm, 90% des alvéoles ayant un diamètre inférieur à 0,5 mm.

Selon une autre variante, le produit est une pâte crue, notamment une base génoise, qui permet d'obtenir après cuisson un produit moelleux, par exemple une génoise de densité inférieure à 0,29 et de module d'Young inférieur à 130.000, et de préférence compris entre 100.000 et 130.000.

Le produit plat, par exemple une galette de chocolat pré-cristallisé, déposée sur un biscuit, ou prise en sandwich entre deux biscuits, donne, après cristallisation de la matière grasse, un biscuit chocolaté avec adhérence d'une face de la galette à une face du biscuit, ou bien encore un biscuit "sandwiché" au chocolat, la galette de chocolat étant prise entre deux biscuits avec adhérence des faces en contact. Seule une partie de la matière grasse peut être cristallisée.

D'autres caractéristiques et avantages de l'invention apparaîtront mieux à la lecture de la description qui va suivre, en liaison avec les dessins dans lesquels :

- la figure 1a est un schéma d'un dispositif pour la mise en oeuvre du procédé, les figures 2a à 2c représentant un mode de réalisation préféré d'un dispositif de dépose, et la figure 1b représentant une variante de la figure 1a adaptée à la dépose sous forme de bande.
- la figure 3 représente une variante d'installation pour la mise en oeuvre du procédé, avec un profil de pression correspondant,
- la figure 4a représente avec coupe partielle, un produit moulé obtenu selon l'invention (exemple 1 - densité à la dépose 0, 6 ; densité 0,74 sur produit après cristallisation), les figures 4b et 4c représentant la répartition du diamètre des bulles respectivement en coupe transversale et en coupe longitudinale, sous la forme d'une fréquence de répartition par classes de diamètre équivalent (en mm) et sous la forme d'une courbe de cumul (en %) en fonction du diamètre équivalent,
- la figure 5a représente un produit "sandwiché" selon l'invention (densité à la dépose 0,6 ; densité du produit après cristallisation : 0,6), et la figure 5b représente un exemple de répartition de la taille des bulles dans le chocolat aéré, avec une même convention de représentation que pour les figures 4b et 4c,
- la figure 6a représente une pépite ou « chunk » de chocolat aéré obtenu selon l'invention (exemple 1 - densité 0,85 à la dépose et après cristallisation), la figure 6b représentant un exemple de répartition de la taille des bulles dans la pépite, avec une même convention de représentation que pour les figures 4b, 4c et 5b,
- la figure 7a représente un test comparatif de pénétrométrie, respectivement dans du chocolat noir (d = 1,3) et dans du chocolat noir aéré selon l'invention (d = 0,74), à l'aide d'un test de pénétrométrie explicité dans la description.
- la figure 7b représente une courbe de pénétrométrie d'un biscuit recouvert de chocolat, à savoir du chocolat noir (courbe I) de densité 1,3, du chocolat au lait (courbe II) de densité 1,3, du chocolat noir aéré (courbe III) de densité 0,6 et du chocolat noir aéré (courbe IV) de densité 0,7.

Dans la description, les pressions données sont des pressions relatives, et les débits de gaz sont mesurés dans des conditions dites "normales" (c'est-à-dire à 0°C, et à la pression atmosphérique).

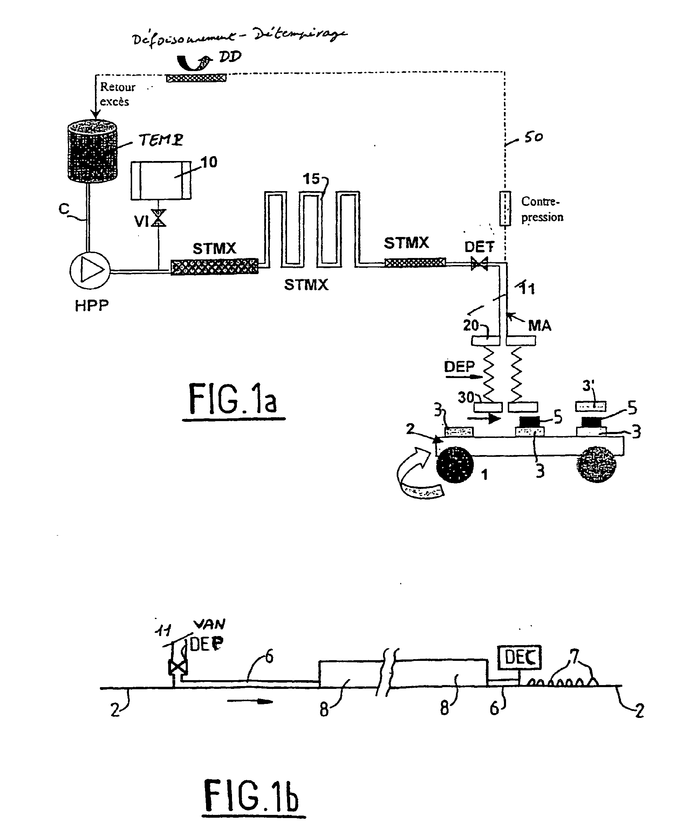

Comme le montre la figure 1a, une composition C à base de chocolat est introduite après tempérage par une tempéreuse TEMP dans une pompe à haute pression HPP, de préférence une pompe multi-membranes, de manière à générer une pression par exemple au moins égale à 20 bars. Une vanne d'injection VI, alimentée en un gaz par exemple de l'air, de l'azote, du $N_2O$ ou du $CO_2$ ou un mélange de ces gaz par un réservoir 10 est tarée à une pression légèrement supérieure à celle qui est générée par la pompe HPP, de manière à injecter du gaz avec un débit sensiblement constant au débouché de la sortie de la pompe HPP. Un circuit de retour 50 permet un détemperage-défoisonnement dans un échangeur de chaleur DD et un retour des excès.

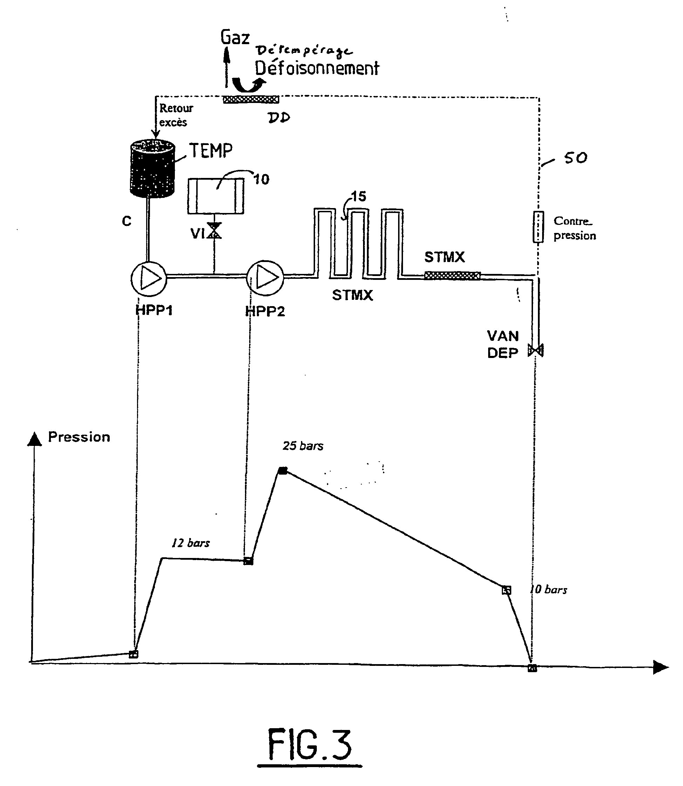

L'ensemble est ensuite mélangé et convoyé vers l'aval par des mélangeurs statiques STMX par exemple des mélangeurs statiques Sulzer de diamètre nominal DN = 20, des mélangeurs Kenics de DN 20 et mélangeurs statiques Sulzer DN10, dont la longueur, le diamètre et le nombre permettent d'ajuster le profil de pression dans le circuit en fonction de la rhéologie de la matrice et de la température de fonctionnement. La matrice reste sous une pression relative comprise entre 8 et 40 bars (selon le montage, et notamment la pression pneumatique, ou contre-pression, située juste après la dépose comme le montre la figure 3), de sorte que la dispersion et/ou dissolution se produise pendant le temps de séjour dans le circuit (environ 3 minutes, mais variable entre 4 secondes et 6 mn selon la configuration des mélangeurs statiques, la densité visée et la viscosité du produit alimentaire). Eventuellement, dans le cas où l'outil de dépose ne tolère pas les fortes pressions, il est possible d'abaisser la contre-pression pour déposer avec une pression comprise entre 2 et 8 bars. Cette modification de la contre-pression n'entraîne que des modifications relativement mineures, notamment sur la consommation de gaz, qui sont facilement ajustables.

La combinaison des mélangeurs statiques permet à la fois la dispersion et/ou la dissolution du gaz dans les différentes phases du produit (grasses et/ou aqueuses) et la thermostatisation de l'ensemble de l'installation à la température de fonctionnement, qui est assurée par l'utilisation d'une tuyauterie à double enveloppe. La faible vitesse de cisaillement engendrée par la présence des mélangeurs statiques contribue également à limiter tout échauffement de la composition en circulation.

A la figure 1a, dans tout ce trajet, à travers le mélangeur statique STMX et la tuyauterie au cours duquel la composition reste maintenue sous pression, on évite un échauffement de la composition en circulation, en particulier en thermostatant la tuyauterie 15, le contact du fluide avec la double enveloppe de la tuyauterie 15 étant facilité par la présence de mélangeurs statiques.

Sur la figure 1b, pour une composition à base de chocolat (chocolat ou substitut de chocolat) qui a été choisie de manière à présenter, à l'état tempéré, une viscosité plastique de Casson de par exemple 8,3 Pa.s et une limite d'écoulement de par exemple 30 Pa (voir exemple 1 ci-après) et pour une pression d'injection du gaz au moins égale à 8 bars et par exemple comprise entre 20 et 25 bars, on obtient après détente par la vanne VANDEP, une matière aérée MA qui peut être produite en continu immédiatement après détente sous forme d'une ou plusieurs bandes 6 et passage dans un tunnel de froid 8, ou bien comme illustré à la figure la déposée sous forme de produits individuels 5. Du fait du choix d'une composition de chocolat de viscosité élevée et de limite d'écoulement élevée, la bande 6 ou les produits individuels 5 ont après dépose une forme qui se conserve tant qu'une force de compression n'est pas appliquée.

Ceci permet de réaliser des produits dont la forme peut rester sensiblement la même que celle des produits déposés. Il suffit de laisser cristalliser le chocolat aéré.

Le dispositif de dépose DEP de la figure la est particulièrement avantageux pour des produits aérés ayant une viscosité β suffisamment élevée (par exemple β entre 20 Pa.s et 500 Pa.s). Pour des viscosités plastiques inférieures, on préférera un dépôt à l'aide d'une vanne à pointeau.

Le fonctionnement du dispositif de dépose DEP de la figure la sera maintenant décrit en relation avec les figures 2a à 2c.

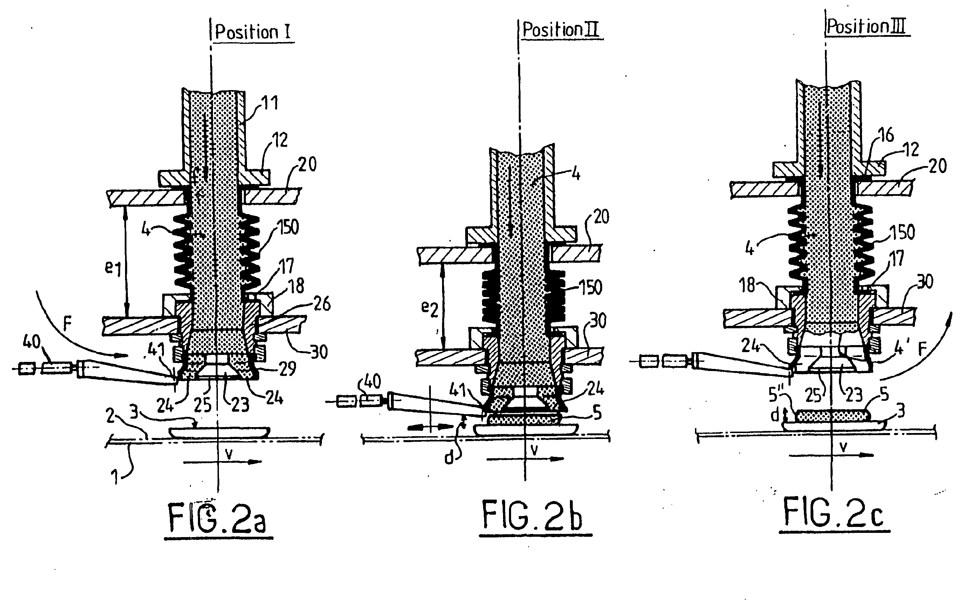

Selon les figures 2a à 2c, un canal 11 est alimenté en continu par le détendeur DET avec la mousse aérée MA. On peut définir la matière aérée MA comme étant pâteuse, semi-pâteuse ou bien semi-liquide, c'est-à-dire que sa viscoélasticité est au minimum suffisante pour qu'une fois déposée sur une surface en petites quantités (2 à 20 g et de préférence 5 à 10 g sur une surface libre), elle conserve une forme définie, sans écoulement notable, tant qu'elle n'est pas soumise à des sollicitations mécaniques, notamment des forces de compression. Le canal d'amenée 11 présente une bride 12 de montage sur une platine 20. Une collerette d'un soufflet 150 est prise entre la bride 12 et la platine 20. Le soufflet 150 prolonge le canal 11 pour former une tête de dépose qui comprend également une buse de dépose 23 pourvue d'une ou plusieurs ouvertures, par exemple un orifice annulaire de dépose 24. Le soufflet 150 présente une collerette 17 emprisonnée entre une bride 18, montée sur une platine 30 mobile par rapport à la platine 20, et le corps de la buse de dépose. La platine mobile 30 est susceptible de se déplacer par rapport à la platine 20 d'un mouvement de va-et-vient vertical de manière à faire varier de manière contrôlée la distance e entre les platines 20 et 30 entre une valeur maximale e1 (figure 2a) et une valeur minimale e2 (figure 2b).

Le mode de réalisation représenté aux figures 2a à 2c est notamment destiné à la dépose du produit 5 sur un biscuit 3 posé sur la face supérieure 2 d'un tapis 1 se déplaçant horizontalement dans le sens de la flèche V, et à cet effet, la platine 20 qui porte un ou plusieurs tubes d'amenée de produit, par exemple destinés à une rangée de biscuits 3, est animée d'un mouvement pendulaire représenté par la flèche F, ce mouvement lui permettant de se synchroniser avec le déplacement du tapis 1 et d'être disposé au-dessus du biscuit 3 avec la même vitesse que celui-ci au moment de la dépose. Après la dépose, le mouvement pendulaire se poursuit par un mouvement de retour et le cycle recommence.

Le corps 29 de la tête de dépose est ainsi animé d'un mouvement combiné, à savoir la combinaison du mouvement pendulaire qui est celui de la platine 20, et du mouvement de va-et-vient qui est celui de la platine 30 lors de la dépose.

A la position I représentée à la figure 2a, la distance entre les platines 20 et 30 est égale à la valeur maximale e1 et on voit que le produit 4 à distribuer remplit entièrement la tête de dépose jusqu'aux ouvertures 24.

Le mouvement pendulaire se poursuit avec un rapprochement rapide de la platine 20 du tapis 1 et la platine 20 est rapprochée de la platine 30 de sorte que leur distance maintenant égale à e2 qui est inférieure à e1 d'une distance qui correspond à la quantité de produit 4 à déposer sur le biscuit 3 (position II représentée à la figure 1b).

Ensuite, le mouvement pendulaire se poursuivant, la tête de dépose s'écarte de nouveau du biscuit 3 et l'écart entre les platines 30 et 20 est rétabli à la valeur maximale e1.

Dans ces conditions, le niveau inférieur du produit 4, représenté à la figure 2c par le repère 4' (position III), est en amont de l'ouverture 24, puisque, par effet de la variation de volume provoquée par la compression-expansion du soufflet 150, du produit 4 a été déposé pour former une galette 5 sur le biscuit 3 et la quantité correspondante manque à présent dans la tête de dépose à la position 3. Ce volume manquant est compensé grâce au fait que le détendeur DET approvisionne de manière continue la tête de dépose 10 avec un débit qui est choisi de manière que, lorsque la tête de dépose sera revenue à la position I pour un nouveau cycle de dépose, le produit 4 viendra de nouveau affleurer l'ouverture 24.

Le détendeur DET et la contre-pression permettent d'ajuster le profil de pression dans le circuit et leur combinaison offre notamment la possibilité de générer deux étapes de détente. Eventuellement, le détendeur DET peut être supprimé, ce qui conduit à une détente en une seule étape.

Le cycle de dépose qui vient d'être décrit permet de ne pas soumettre le produit MA à une mise en pression ou à un cisaillement puisque la dépose s'effectue par simple effet de variation de longueur d'une section tubulaire de la tête de dépose et que le produit MA s'écoule à travers une ou plusieurs ouvertures 24 dont la dimension (en pratique quelques millimètres), est suffisante pour éviter une mise en pression et/ou un cisaillement du produit MA. En outre, l'approvisionnement continu du produit MA par le détendeur DET peut être facilement effectué avec un débit constant, sans détériorer les qualités de texture de celui-ci.

Le dispositif de dépose DEP peut donc être utilisé avec un produit aéré tel que la mousse MA qui présente une texture vulnérable aux sollicitations mécaniques de cisaillement.

Après l'étape de dépose du produit MA sous forme d'îlots 5 ou bien de couronne annulaire, il est possible d'appliquer un deuxième biscuit 3 par-dessus la galette 5 pour former un sandwich.

Dans le procédé illustré aux figures 2a à 2c, le produit aéré MA est directement déposé sous forme d'une galette plate 5 de hauteur d, cette distance d étant sensiblement égale à la distance entre la face terminale 25 de la buse de dépose 23 pourvue d'un orifice par exemple annulaire de dépose 24 et le biscuit 3.

Comme le montre la figure 2b, à la position II, la distance entre la face 25 et la face supérieure du biscuit 3 est sensiblement égale à d, ce qui crée un espace de confinement dans lequel est distribué le produit 4 sous forme d'une galette 5. La différence entre les distances e1 et e2 est choisie en fonction de la distance d qui définit la hauteur de la galette 5 de sorte que la galette 5 occupe la surface désirée sur le biscuit.

En fin de phase de dépose (figure 2b - position 2), la galette 5 est séparée de la tête de dépose par un dispositif de découpe tel qu'un coupe-fil 40 pourvu d'un fil de découpe 41 animé d'un mouvement de va-et-vient. On obtient ainsi (figure 2c - position III), un biscuit 3 sur lequel est disposée une rondelle de produit 5 dont la face supérieure est parallèle au biscuit.

Pour obtenir un sandwich, il suffit de poser sur la rondelle 5 un deuxième biscuit 3' sans que cette fois-ci il y ait besoin d'appuyer pour obtenir un étalement latéral et un écrasement du produit. Ceci permet d'obtenir un produit final présentant un fourrage aéré 5 dont le bord externe 5" est relativement régulier, la forme définitive stable étant obtenue par cristallisation de la matière grasse, dans l'exemple ci-dessus.

En outre, le dosage volumétrique est précis. En effet, comme la dépose ne s'accompagne pas d'une mise en pression susceptible d'affecter de manière trop importante la texture du produit notamment l'alvéolation, et comme cette absence de mise en pression évite toute dilatation des éléments constituant la tête de dépose 10, notamment le soufflet 150, la tête de dépose 10 ne se déforme pas lors de la dépose et on est sûr d'obtenir un dosage précis et régulier.

La dépose peut s'effectuer, comme décrit, sur un support tel qu'un biscuit ou une génoise, etc..., mais elle peut être également réalisée directement sur le tapis 1. Dans ce cas, le produit alimentaire peut être en particulier une pâte crue, ce qui fait que le procédé peut être utilisé pour l'obtention de pâtons crus.

Du fait que, pour le mode de réalisation des figures 2a à 2c, le biscuit supérieur 3 est appliqué sans mise en pression substantielle de la rondelle 5, celui-ci peut être un biscuit ajouré pourvu d'ouvertures traversantes. Ce procédé permet ainsi un élargissement notable de la gamme des produits susceptibles d'être fabriqués avec un même appareillage.

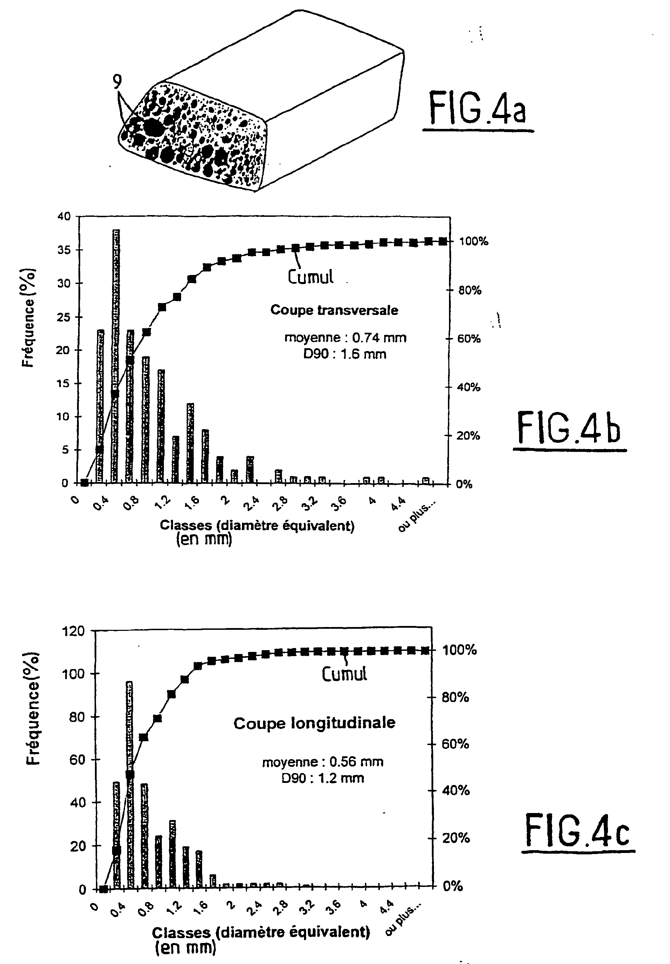

On peut également façonner les produits à la forme désirée, par exemple par moulage à pression atmosphérique (figures 4a à 4c). Dans le cas d'un produit moulé, il faut appliquer une force (compression, vibration, flux d'air, etc...) pour étaler le produit dans le moule. Ce façonnage peut être également réalisé par découpe d'une bande déposée, cette découpe pouvant intervenir avant, pendant ou de préférence après que le produit ait cristallise entièrement. Cette dépose peut s'effectuer comme illustré à la figure 1b en disposant le détendeur DET à proximité des tapis 2 et en prévoyant un dispositif de découpe DEC de la bande 6, à la sortie du tunnel de froid 8, de manière à découper la bande 6 après cristallisation pour obtenir des produits individuels tels que des produits découpés dits « chunks » 7.

Après cristallisation, le produit aéré conserve la forme qui lui avait été conférée par exemple par découpe ou moulage.

La dépose du produit aéré peut aussi consister en un enrobage partiel ou total (dessus, dessous, toutes les faces.) d'un autre produit, par exemple un produit de biscuiterie ou de pâtisserie qui sera ainsi enrobé de chocolat (ou d'un produit à base de chocolat). Dans ce cas, afin de minimiser le défoisonnement de la bande d'enrobage du produit aéré, il faut de préférence remplacer la classique boîte à rideau de l'enrobeuse, qui est ouverte (donc à pression atmosphérique), par une conduite sous pression se terminant par une fente : celle-ci permet d'extruder un rideau de produit aéré, par exemple du chocolat aéré, tout en gardant le produit aéré sous pression jusqu'au rideau. L'épaisseur de cette fente est variable de façon à pouvoir influencer la pression dans la tuyauterie juste en amont, et de façon à pouvoir modifier l'épaisseur du rideau de produit aéré. Ce type de modification peut aussi être réalisé sur une vague formant le talon lors de l'enrobage.

Il faut en général une sollicitation mécanique (compression, vibration, flux d'air ...) pour permettre l'étalement du produit aéré, notamment du chocolat aéré, sur le support à enrober.

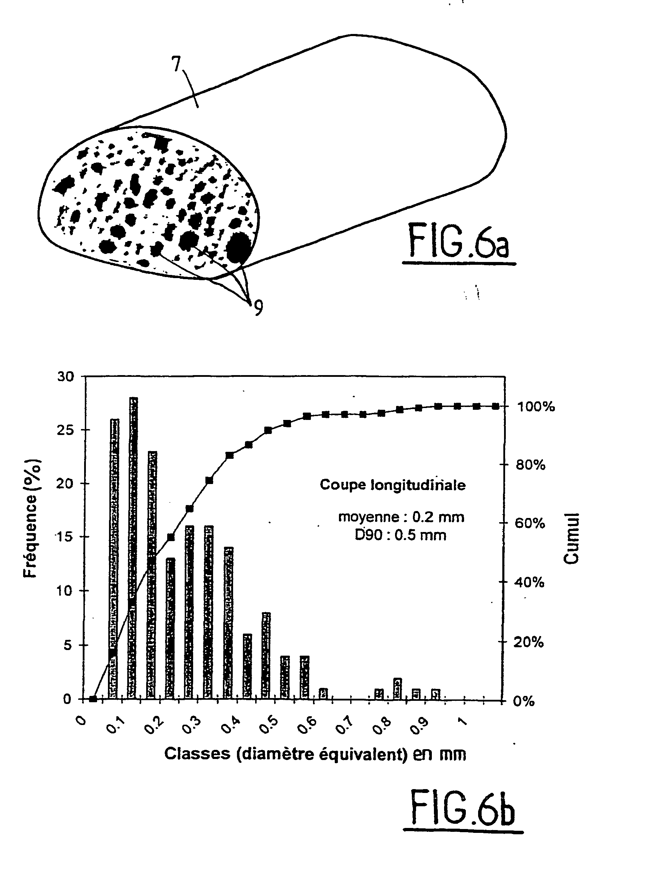

Ainsi, la combinaison d'une dispersion et/ou dissolution sous pression élevée (> 8 bars), d'une consistance relativement élevée (viscosité plastique de Casson comprise entre 2 et 500 Pa.s notamment entre 5 et 500 Pa.s et plus particulièrement entre 10 et 500 Pa.s et seuil d'écoulement compris entre 2 et 300 Pa) et d'une faible vitesse de cisaillement par utilisation d'un ou plusieurs mélangeurs statiques conduit, après avoir laissé le produit et le gaz en contact sous pression pendant un temps minimum suffisant (par exemple entre 4 secondes et 6 mn) pour obtenir une dispersion et/ou dissolution satisfaisante, à l'obtention d'un produit aéré non cristallisé dont la viscoélasticité est suffisante pour éviter son écoulement, ce qui lui permet de conserver temporairement sa forme jusqu'à ce qu'une forme stable soit obtenue par cristallisation au moins partielle ou cuisson. Avant cristallisation, le produit aéré déposé peut être façonné par exemple par moulage (figures 4a à 4c) ou découpage (figures 6a et 6b) pour obtenir après cristallisation ou cuisson des produits individuels de forme stable.

Une variante d'installation est représentée à la figure 3. Le circuit est constitué de deux pompes haute pression HPP1 et HPP2, la première pompe HPP1 étant utilisée pour gaver la seconde HPP2, ce système étant particulièrement avantageux dans le cas de pâtes très consistantes telles que celles des exemples 3 et 4. On utilise à cet effet deux pompes à haute pression HPP1 (12 bars) et HPP2 (25 bars) en cascade. Le gaz ($CO_2$) est injecté à une pression intermédiaire (12 bars). La première pompe est alimentée en pâte crue ou en chocolat tempéré dans une tempéreuse TEMP. Une ligne 50 permet un retour du débit en excès, par exemple lors d'un arrêt de production. Le produit aéré MA en excès est défoisonné et réchauffé dans un mélangeur DD, puis retournée à la tempéreuse TEMP.

L'injection de gaz peut également être effectuée en sortie de la pompe HPP2.

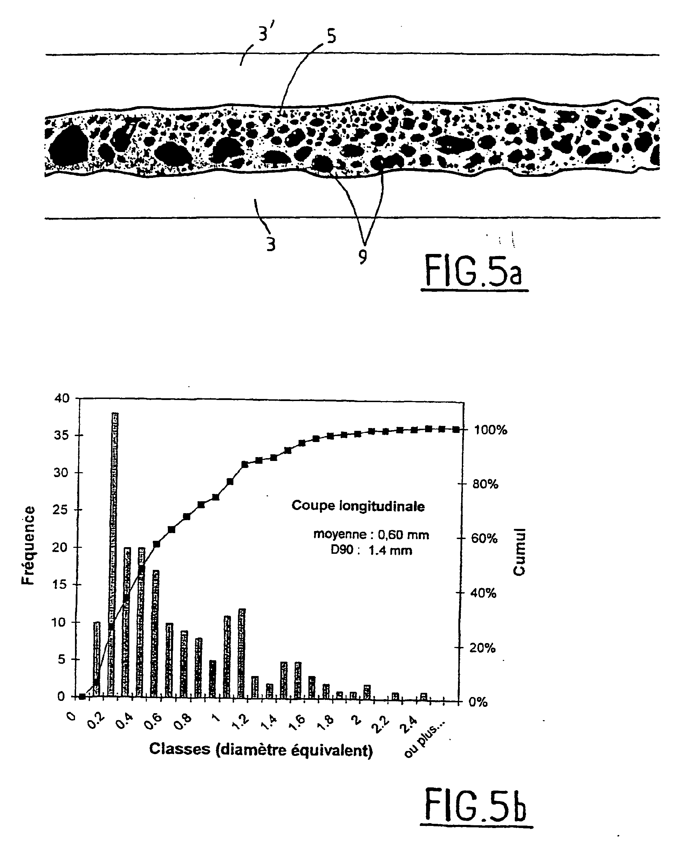

Lorsqu'on réalise un produit de type "sandwiché", par exemple (voir figures 5a et 5b) une galette de chocolat 5 entre deux biscuits 3 et 3', la dépose du biscuit 3' sur la galette de chocolat 5 non cristallisé exerce une contrainte sur celle-ci, qui est inférieure à sa limite d'écoulement (et qui peut être proche de celle-ci) et n'en modifie donc la forme que très légèrement. De plus, la présence du biscuit supérieur 3' limite le dégazage et permet d'obtenir une densité finale de la masse aérée très proche de la densité à la dépose. On a pu ainsi observer une différence de densité inférieure ou égale à 3 %.

Cette force d'appui facilite l'adhésion des faces de la galette de chocolat à la face interne des biscuits 3 et 3' et donc la cohésion du produit fini, sans nécessiter d'opération additionnelle, et sans dégrader de manière sensible l'alvéolation du produit qui conserve ainsi ses qualités.

La dépose du biscuit supérieur 3' s'accompagne d'une contrainte au moins égale à l'effet du poids du biscuit 3' sur la surface de contact, ce qui correspond à une pression d'environ au moins 50 Pa. Cette contrainte est en général proche du seuil d'écoulement de la galette. Du fait de ces contraintes, les bulles 9 de la galette de chocolat 5 présentent après solidification de la galette 5 une anisotropie plus ou moins prononcée.

En relation avec les figures 6a et 6b, un fragment découpé de chocolat aéré 7 obtenu selon l'invention, présente des bulles 9 dont le diamètre équivalent se répartit par exemple comme représenté sur la figure 4b. Les fragments ou ("chunks") sont obtenus à partir d'une bande de largeur comprise entre 2 mm et 10 mm et de hauteur entre 2 mm et 5 mm Il se produit spontanément un dégazage des bulles de plus grand diamètre qui viennent "crever" la surface du chocolat semi-pâteux, la surface du chocolat se refermant ensuite, d'où un aspect lisse en surface. Il en résulte également une diminution de la valeur moyenne des bulles qu'illustre la figure 6b en comparaison des figures 4b, 4c et 5b qui correspondent à des produits de plus grande taille pour lesquels ce phénomène de dégazage est peu ou pas sensible.

La découpe de la bande s'effectue par exemple à des distances comprises entre 5mm et 15mm. Il est avantageux d'effectuer la découpe après la cristallisation du chocolat.

La figure 7a représente les résultats de tests de pénétrométrie. Pour des produits fortement cristallisés tels que le chocolat, qui ne tolèrent qu'une très faible déformation avant rupture, la caractérisation analytique consiste à réaliser des essais de pénétrométrie à l'aide d'une sonde de faible diamètre (1,5 mm par exemple), directement dans le produit fini (tablette de chocolat ou biscuit sandwiché). La contrainte est enregistrée en fonction du taux de déformation. L'énergie globale (en mJ) exercée sur le produit par la sonde est alors calculée.

Ces tests ont été réalisés respectivement pour un chocolat noir non aéré (densité 1,3) et un chocolat noir aéré selon l'invention (d = 0,74). Pour des pénétrations supérieures à 20%, le chocolat noir aéré est environ 9 fois moins dur que le chocolat noir standard non aéré.

Des essais similaires ont été effectués sur des biscuits "sandwichés" de Marque "Prince" au chocolat noir (d = 1,3, courbe I), au chocolat au lait (d = 1,3, courbe II), et pour des biscuits de même type, mais pour lesquels le chocolat noir est aéré à une densité d de 0,7 (courbe IV), ou bien de 0,6 (courbe III).

Dans le premier cas, on observe une transition nette entre la dureté du biscuit (contrainte d'environ 2 MPa) et celle du chocolat noir non aéré (contrainte d'environ 14 MPa), ou du chocolat au lait non aéré (contrainte d'environ 10 MPa). Le chocolat noir aéré à 0,6 présente une densité très proche de celle du biscuit, voire légèrement inférieure, et la transition entre les couches de biscuit et de chocolat aéré est très peu sensible. Pour le chocolat noir aéré à 0,7, la dureté est légèrement supérieure à celle du biscuit et la transition entre les biscuits et le chocolat reste peu sensible.

On peut en particulier réaliser un produit alimentaire associant au moins un biscuit et un produit à base de chocolat, de préférence cristallisé, présentant des faces planes, caractérisé en ce que le produit à base de chocolat est alvéolé et présente une densité comprise entre 0,5 et 1,1 , plus particulièrement entre 0,6 et 0,9 et de préférence entre 0,7 et 0,8. Avantageusement, au moins 80% des alvéoles ont une dimension comprise entre 0,1 mm et 1,5 mm, au moins 30% des alvéoles ayant un diamètre supérieur à 0,2 mm. Ces grosses bulles ont l'avantage, par rapport à des petites bulles, de procurer une texture moins collante, une couleur moins décolorée, et une viscosité plus faible à la dépose, donc la possibilité d'un produit moins gras à viscosité égale ; le goût est aussi moins modifié par rapport à un produit non aéré. Ladite densité peut être choisie pour que le biscuit et ledit produit aient des duretés égales ou voisines, de sorte qu'à la mastication, un consommateur perçoive peu de transition entre le biscuit et le produit à base de chocolat.

En outre, la mise en oeuvre d'une galette de chocolat aéré permet d'augmenter l'épaisseur de la galette, par exemple jusqu'à 4 mm, ce qui n'était pas possible avec du chocolat non aéré, en raison de sa dureté.

On obtient ainsi un produit original, de par le décalage entre l'estimation visuelle que le consommateur opère avant dégustation et l'impression recueillie à la mastication.

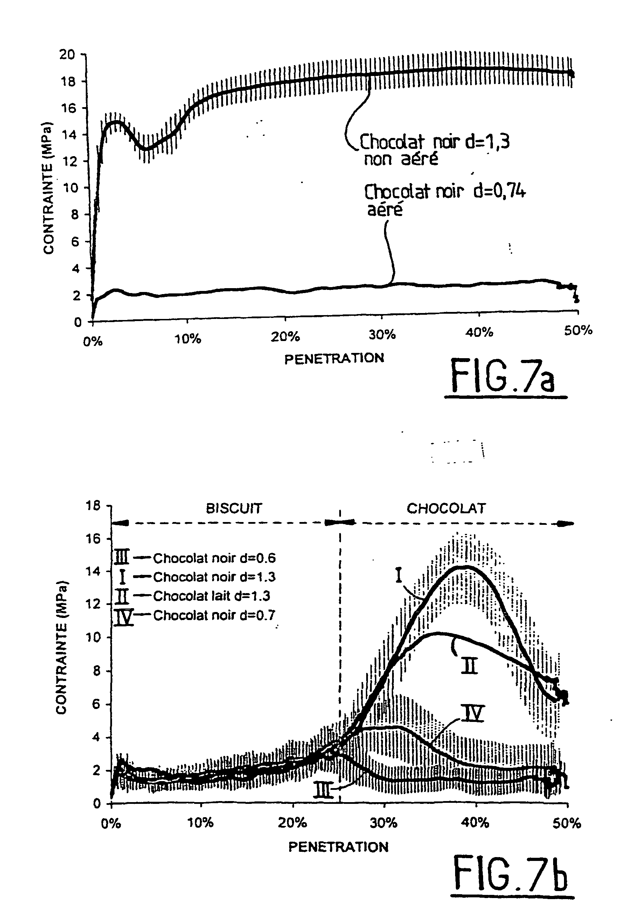

Le tableau 1 ci-après donne l'énergie totale (en mJ) qui correspond à l'interprétation des courbes de la figure 7a et de la figure 7b pour les produits "sandwichés aérés" et "sandwichés non aérés".

| ENERGIE TOTALE (mJ) | TABLETTE CHOCOLAT NOIR | | PRINCE CHOCOLAT NOIR | | | PRINCE CHOCOLAT AU LAIT |
|---|---|---|---|---|---|---|
| | non aéré d = 1,3 | Aéré d = 0,6 | non aéré d = 1,3 | aéré d = 0,6 | aéré d = 0,71 | non aéré d = 1,31 |
| Moyenne | 181 | 22 | 66 | 26 | 32 | 62 |
| Ecart-type | 10 | 5 | 8 | 4 | 9 | 7 |

On peut également déposer individuellement à l'aide d'une vanne pointeau, des pépites en forme de gouttelette. Ces pépites ont de préférence une densité comprise entre 0,7 et 0,9.

Pour les pâtes crues à base de farine, par exemple la pâte à génoise, on utilise des formulations pouvant contenir des épaississants solubles à froid ou à chaud (guar, pectine, alginate, caroube, carboxyméthycellulose etc ...) et/ou des fibres dispersibles (gluten, fibres cellulosiques, etc ...). Comme dans le cas du chocolat, le choix d'une viscosité suffisamment élevée permet, de manière surprenante, d'obtenir une aération de haute qualité en dépit du faible niveau d'agitation procuré par le mélangeur statique, pour une injection de gaz à une pression suffisante (20 bars et plus).

La dépose peut être effectuée directement sur un tapis 2 à l'aide du dispositif de la figure 1a ou du dispositif de la figure 1b. Une cuisson est ensuite effectuée pour obtenir un produit cuit tel qu'une génoise.

Un essai comparatif entre une injection de $CO_2$ selon l'invention, et un foisonnement classique par un appareil de marque MONDOMIX illustre ce phénomène.

La rhéologie des produits moelleux obtenus par une cuisson de la pâte aérée selon l'invention a été mesurée après un temps de stockage en emballage étanche suffisant pour obtenir l'équilibration en humidité du produit. Des éprouvettes cylindriques de mie sont découpées avec un emporte pièce et comprimées à l'aide d'une machine de traction compression de type Instron ou Adamel Lhomargy, en utilisant une vitesse constante de déformation (40 mm/min), une sonde de 25 mm de diamètre et une plage de déformation de 0 à 50%. Les données enregistrées par le capteur de force (en N) sont converties en contrainte (en Pa) en les normalisant par la surface de contact entre la sonde et l'éprouvette. On appelle « profil de compression » la représentation de la contrainte résistante (exercée par le produit sur la sonde) en fonction du taux de déformation.

Dans le domaine des faibles déformations, la contrainte évolue d'abord linéairement avec le taux de déformation, ce qui correspond au domaine d'élasticité linéaire exprimé par la loi de Hooke :

$$\sigma = E\gamma$$

où $\sigma$ représente la contrainte (en Pa), E le module d'Young (en Pa) et $\gamma$ le taux de déformation (sans unité). Le module d'Young est classiquement utilisé comme un indice de fermeté en résistance des matériaux : dans le cas de produits de pâtisserie, plus le module d'Young est faible et plus les produits peuvent être considérés comme moelleux. Il a été vérifié que d'autres critères, tels que l'énergie globale pendant le cycle de compression, donne la même hiérarchisation des échantillons en terme de « moelleux ».

Après le test de compression, la teneur en eau des éprouvettes est mesurée par étuvage à 102°C pendant 4 heures. L'activité de l'eau est mesurée à partir du point de rosée à 20°C (Décagon).

Les résultats en sont montrés dans le tableau 2 ci-après :

| PATE GENOISE VISCOSITE PLASTIQUE $\beta$ | % DE PECTINES | FOISONNEMENT | DENSITE PRODUIT FINAL APRES CUISSON | MODULE D'YOUNG |
|---|---|---|---|---|
| 1,5 | 0% | "Mondomix" | 0,294 | 143.000 |
| 8,7 | 0,3% | "Mondomix" | 0,320 | 186.000 |
| 68 | 1% | "Mondomix" | 0,348 | 226.000 |
| 8,7 | 0,3% | Statique + $CO_2$ haute pression | 0,255 | 111.000 |
| 68 | 1% | Statique + $CO_2$ haute pression | 0,268 | 114.000 |

Le tableau 2 ci-dessus montre que le procédé selon l'invention permet d'obtenir des génoises plus moelleuses (module d'Young de l'ordre de 110.000 Pa) que par le procédé de foisonnement classique, même lorsque celui-ci traite une pâte de génoise particulièrement fluide (module d'Young = 143.000 Pa) (voir également l'exemple 3 ci-après ainsi que le tableau 6).

Pour les pâtes plus consistantes (0,3% à 1% de pectines) le procédé "MONDOMIX" donne des résultats très peu satisfaisants là où le procédé de l'invention procure les résultats les plus probants.

Les quatre exemples ci-après vont permettre de mieux préciser l'invention.

La caractérisation rhéologique des matrices alimentaires injectées selon le procédé a été effectuée à l'aide d'un rhéomètre Carrimed CSL500 fonctionnant en contrainte imposée, avec une géométrie de type cône-plan et une thermostatisation par effet Peltier. Les courbes d'écoulement sont réalisées par un balayage linéaire en contrainte de 0 à 500 Pa en 3 minutes, avec un enregistrement automatique de la vitesse de cisaillement correspondante. Pour un fluide newtonien, la viscosité est calculée comme suit :

$$\sigma = (d\gamma/dt).\eta \qquad\qquad Eq. \ 1$$

avec $\eta$ la viscosité (en Pa.s), $dy/dt$ la vitesse de cisaillement (en $s^{-1}$) et $\sigma$ la contrainte (en Pa).

En général, les produits alimentaires visqueux tels que concernés par l'invention sont non newtoniens et présentent en particulier un seuil d'écoulement ($\sigma_0$), c'est-à-dire manifestent un comportement de type solide en dessous d'une certaine contrainte seuil. L'existence d'un seuil d'écoulement a pour conséquence que ces fluides peuvent maintenir leur forme quand ils sont déposés sur une surface libre, comme les bandes de chocolat déposées en continu, les pépites ou les spots de crème grasse déposées sur des sandwichs. Les modèles mathématiques tels que le modèle de Casson (Eq.2) ou d'Herschel Bulkley (Eq. 3) sont couramment utilisés pour caractériser la rhéologie de ces fluides à seuil d'écoulement :

$$\sigma^{0.5} = \sigma_0^{0.5} + (\beta.\ d\gamma/dt)^{0.5}. \qquad\qquad Eq. \ 2$$

$$\sigma = \sigma_0 + K.(d\gamma/dt)^n \qquad\qquad Eq. \ 3$$

Le coefficient $\beta$ du modèle de Casson est appelé viscosité plastique. Les coefficients K et n du modèle d'Herschel-Bulkley sont respectivement appelés indice de consistance et indice d'écoulement. La qualité de l'ajustement du modèle théorique aux données expérimentales peut être mesurée par le coefficient de régression ($R^2$). Le modèle de Casson est classiquement utilisé pour caractériser la rhéologie des chocolats fondus (à 40°C) et a également été choisi pour caractériser des beurres d'arachides en phase fondue (à 65°C) dans le brevet US 5,230,919 de PROCTER & GAMBLE. Le brevet US 5,230,919 de PROCTER & GAMBLE utilise cependant un viscosimètre de type Brookfield pour les mesures de viscosité sur les beurres d'arachide. Il s'agit d'une méthode dite de « rhéologie empirique », qui n'est reconnue valide que sur des fluides newtoniens et n'est donc pas appropriée à ce type de produits. Les valeurs mentionnées dans le brevet PROCTER & GAMBLE ne sont donc que des indications relatives.

Le terme de « viscoélasticité » se réfère à la rhéologie des matrices alimentaires. En particulier, les descripteurs définis dans les équations 2 et 3 (c'est-à-dire le seuil d'écoulement, et/ou la viscosité plastique, et/ou l'indice de consistance) possèdent une valeur élevée par rapport aux matrices connues et classiquement transformées en industrie alimentaire.

Pour caractériser l'alvéolation des produits, on opère de la manière suivante.

Après découpe des échantillons au microtome, leur aération est caractérisée par analyse d'image, en utilisant une caméra noir et blanc, un objectif de 100 mm, une allonge de 20 mm (sauf pour l'exemple 3, pour lequel l'allonge est de 60 mm), une lumière froide arasante et le logiciel de traitement d'images Optimas 6.2. Le diamètre équivalent moyen des alvéoles est déterminé ainsi que le diamètre D90 (90% des alvéoles ont un diamètre inférieur ou égal à D90).

Exemple 1 :

Un chocolat de composition suivante est utilisé :

| | |
|---|---|
| Sucre : | 58,3% |
| Pâte de cacao : | 39,0% |
| Beurre de cacao : | 2,1% |
| Lécithine : | 0,6% |
| Vanille : | 0,02%. |

Ce chocolat est tempéré à 29°C selon les règles de l'homme de l'art dans une tempéreuse industrielle. La rhéologie du chocolat tempéré est donnée dans le tableau 3.

| | Limite d'écoul. (Pa) | Viscosité plastique β (Pa.s) | Indice Consistance K (Pa.s$^n$) | Indice d'écoulement n (sans unité) |
|---|---|---|---|---|
| Casson R$^2$=0,99896 | 30,0 | 8,3 | – | – |
| Herschel-Bulkley R$^2$=0,99967 | 35,8 | – | 32,4 | 0,75 |

Tableau 3 : caractéristiques rhéologiques du chocolat tempéré utilisé en exemple 1.

Le chocolat possède une consistance (viscosité plastique et seuil d'écoulement) telle qu'il ne peut être foisonné par mélange dynamique de type Mondomix. L'échauffement important qui résulterait de l'agitation, même à des faibles vitesses de tête, détruirait le tempérage et empêcherait l'obtention d'un chocolat stable dans le temps (risques importants de blanchiment).

Le chocolat tempéré est à 29°C injecté par pompage dans un dispositif selon l'invention, avec un débit de 30 kg/h. Le gaz injecté est du dioxyde de carbone ($CO_2$) avec un débit de 46 l/h. La pression maximale dans le circuit est de 40 bars, le temps de séjour dans le circuit est de 3 minutes. Le circuit comporte en série des mélangeurs statiques suivants : 30 cm de Sulzer de DN 20, 70 cm de Kenics de DN20, 110 cm de Kenics de DN20 et 6 cm de Sulzer de DN10. La pression à la dépose est maintenue à 12 bars à l'aide d'une vanne de contre-pression à membrane ou d'une vanne à pointeau faisant fonction de contre-pression (qui freine fortement le débit, en occasionnant une perte de charge importante).

Le chocolat peut être déposé à l'aide d'un système de vanne à pointeau dans un moule en forme de barre qui est mis en vibration, puis envoyé en tunnel de refroidissement opérant en conditions industrielles standard. En particulier et contrairement au brevet MORINAGA précité, la cristallisation s'effectue à pression atmosphérique. Après solidification, on obtient une barre aérée de densité moyenne 0,74 et dont la structure interne est alvéolée. La caractérisation des tailles d'alvéoles par analyse d'images donne un diamètre moyen des alvéoles de 0,70 mm et un diamètre D90 de 1,3 mm. L'état de surface de la face en contact avec le moule est similaire au produit standard (lisse, brillant et de même couleur), mais la face exposée à l'air possède un état de surface irrégulier. L'énergie du cycle de pénétrométrie effectuée sur une tablette de dimension 74 x 30 x 13 $mm^3$ est de 22 mJ, contre 181 mJ pour le même chocolat non aéré. La barre de chocolat aéré possède donc une texture « tendre » voire « croustillante » par rapport au chocolat non aéré.

Alternativement, le chocolat peut être déposé en continu sur un tapis par une série de buses montées en parallèle et de faible section, de façon à ce que le passage dans la buse s'accompagne d'une forte variation de pression. Les rubans continus de chocolat ainsi formés sont envoyés dans un tunnel de refroidissement (opérant en conditions standard) pour solidification et sont ensuite cassés en petits fragments d'environ 6 mm de côté par un système de rouleaux mobiles. Ces « fragments » (chunks) possèdent une densité de 0,85 environ et une structure alvéolée, avec un diamètre moyen de 0,20 mm (au lieu de 0,70 mm) et un D90 de 0,50 mm (au lieu de 1,3 mm). Cette différence dans les diamètres moyens est due au phénomène de dégazage qui a été explicité plus haut dans la description. L'état de surface extérieur est similaire au produit standard (lisse, brillant et de couleur identique). On peut obtenir ainsi des produits alvéolés à base de chocolat de densité entre 0,5 et 1, plus particulièrement entre 0,6 et 0,9 et de préférence entre 0,7 et 0,8.

Une troisième possibilité consiste à déposer un volume donné de chocolat sous une forme dite « spot » sur une base biscuitière, puis d'appliquer délicatement une deuxième base biscuitière, de façon à constituer un sandwich contenant du chocolat aéré. Après cristallisation du chocolat en tunnel de froid à pression atmosphérique, on obtient un sandwich cohésif, les deux biscuits étant fermement solidarisés par le chocolat cristallisé. La densité du chocolat est de 0,65 et il possède une texture alvéolée, avec un diamètre moyen de 0,60 mm et un D90 de 1,4 mm. Les tests de pénétrométrie montrent par ailleurs que ce chocolat aéré possède une dureté beaucoup plus faible que le chocolat non aéré. Le sandwich dans sa totalité reste donc tendre et facilement tranchable, contrairement au même sandwich réalisé avec un chocolat non aéré. L'énergie globale de pénétrométrie est de 26 mJ pour le sandwich aéré contre 92 mJ pour le sandwich avec le même chocolat non aéré.

Exemple 2 :

Une crème grasse, pouvant être considérée comme un analogue de chocolat, de composition suivante est utilisée :

| | |
|---|---|
| Matières grasses totales : | 35% |
| Sucre(s) : | 50% |
| Poudre de cacao dégraissé : | 15%. |

La rhéologie de la crème grasse est donnée dans le tableau 4 pour deux températures.

| | Limite d'écoul. (Pa) | Viscosité plastique $\beta$ (Pa.s) | Indice de Consistance K (Pa.$s^n$) | Indice d' d'écoulement n (sans unité) |
|---|---|---|---|---|
| Casson 35°C $R^2$=0,99897 | 2 | 2,8 | – | – |
| Casson 20°C $R^2$=0,99606 | 24,6 | 46,4 | – | – |
| Herschel 35°C $R^2$=0,99988 | 6,2 | – | 4,5 | 0,92 |
| Herschel 20°C $R^2$=0,98352 | 42,1 | – | 111,3 | 1,0 |

<u>Tableau</u> 4 : caractéristiques rhéologiques de la crème utilisée en exemple 2.

La crème est injectée par pompage dans le procédé selon l'invention, avec un débit de 30 kg/h. Le gaz injecté est du dioxyde de carbone ($CO_2$) avec un débit de 43 1/h. La pression maximale dans le circuit est de 26 bars. Le temps de séjour dans le circuit est de 3 minutes. Le circuit comporte en série un débitmètre massique et les mélangeurs statiques suivants : 30 cm de Sulzer de DN 20,70 cm de Kenics de DN20, 110 cm de Kenics de DN20 et 40 cm de Sulzer de DN10. La pression à la dépose est maintenue à 10 bars à l'aide d'une contre-pression à membrane ou d'une vanne à pointeau faisant fonction de contre-pression (freine fortement le débit, occasionnant une perte de charge importante). En sortie de procédé, la crème est déposée sous forme ponctuelle de « spot » sur un biscuit, puis délicatement recouverte d'un biscuit. Le sandwich ainsi formé est envoyé en tunnel de refroidissement opérant en conditions industrielles standard. En particulier et contrairement au brevet MORINAGA, la cristallisation s'effectue à pression atmosphérique.

Après solidification, on obtient un produit aéré de densité moyenne 0,65 et dont la structure interne dépend fortement de la température de la crème lors de l'incorporation du gaz et ensuite de la dépose.

Pour une température d'incorporation et de dépose égale à 35°C, la crème est relativement fluide de sorte que la rapide croissance et coalescence des bulles conduit après solidification à l'obtention d'alvéoles macroscopiques (D moyen de 0,6 mm et D90 de 1,2 mm). La dépose se fait dans ces conditions préférablement à l'aide d'un système de vanne à pointeau.

La crème étant relativement fluide ($\beta$ = 2,8 Pa.s et limite d'écoulement de 2 Pa, avant aération), elle tend à s'écouler sous l'effet de son propre poids dès que les quantités déposées sont notables. Ce phénomène relativement lent de fluage peut être maîtrisé par le contrôle des quantités déposées et un envoi rapide en tunnel de refroidissement. D'autre part, ce fluage est compensé par l'expansion du produit qui s'opère préférentiellement sur la surface libre du produit, c'est-à-dire verticalement du fait des forces de frottement entre le fluide et le support (biscuit ou tapis de dépose) qui limitent l'expansion latérale.

Par contre, pour une température de l'ordre de 20°C, la viscosité plastique de Casson et le seuil d'écoulement sont élevés et augmentent rapidement du fait de la cristallisation de la matière grasse, ce qui ralentit fortement la croissance de la coalescence des bulles. Après solidification totale, l'alvéolation de la crème est de plus petite taille que pour une température de 35°C et possède donc une apparence proche de la crème Prince standard, tout en possédant une densité beaucoup plus faible (0,65). Dans ce cas de figure, la dépose à soufflet est particulièrement adaptée.

<u>Exemple 3 :</u>

Un chocolat Noir contenant 25% de matière grasse est tempéré à 29°C selon les règles de l'art. Sa rhéologie est :

| | Limite d'écoule-ment (Pa) | Viscosité plastique $\beta$ (Pa.s) | Indice de consis-tance K (Pa.s$^n$) | Indice d'écoule-ment n (sans unité) |
|---|---|---|---|---|
| Casson 40°C $R^2$ =0,998 | 23 | 5,4 | | |
| Herschel-Bulkley tempéré à 29°C $R^2$ =0.999 | 16 | | 25,9 | 0,85 |

Sa densité à 29°C est 1280 g/l avant aération.

Ce chocolat sortant de la tempéreuse entre dans un dispositif selon l'invention, comprenant une pompe haute pression à membranes, un injecteur de gaz, 45 cm de tuyauterie DN20 (20 mm) et 55 cm de mélangeurs statiques Sulzer SMX DN20, une contre-pression pneumatique où passe le flux en excès, qui retourne en amont de la tempéreuse via un réchauffement à 50°C assurant le détempérage et le défoisonnement. Tout le dispositif est en double enveloppe à 29°C, hormis la partie entre la vanne de contre-pression et le retour tempéreuse, qui est à 50°C comme indiqué ci-dessus. Juste en amont de la contre-pression, un ou plusieurs piquages courts équipés chacun d'une vanne à pointeau, permettent de déposer le chocolat en bande de 6 mm de large x 3 mm de hauteur sur le tapis d'un tunnel de refroidissement, qui est à pression atmosphérique. Après cristallisation partielle ou complète, ces bandes peuvent être découpées à la longueur voulue. Le diamètre de sortie de la vanne à pointeau dépend notamment de la vitesse linéaire du tapis recevant la dépose en continu. Par exemple, il est de 2,6 mm pour une vitesse de tapis de 3,2 m/s.

La contre-pression pneumatique permet de contrôler la pression juste en amont de la vanne à pointeau (appelée pression à la dépose), réglable dans cet exemple entre 1 et 10 bars relatifs. Au passage de la vanne à pointeau, le chocolat aéré passe alors brutalement à la pression atmosphérique. La vitesse de cisaillement subie dans la vanne, et cette brutale différence de pression, permet la désorption et l'expansion du gaz, d'où une « aération » du chocolat déposé sur le tapis. Le débit de chocolat est de 72 kg/h. Du $CO_2$ ou du protoxyde d'azote ($N_2O$) sont d'abord injectés à 65 litres normaux par heure (notés Ln/h), puis à 97 Ln/h.

La pression du chocolat juste avant la dépose est de 4 bars ; la pression du chocolat juste après l'injection de gaz est de 19 bars ; la pression de gaz sur la membrane de la contre-pression pneumatique est de 4,1 bars. Le temps de séjour total du chocolat entre l'injection du gaz et la dépose est de 16 secondes, dont 8 secondes dans les mélangeurs statiques.

La densité est mesurée sur le chocolat aéré :

■ Liquide, prélevé en pot 135 ml (cylindre de 52. mm de diamètre) en ouvrant totalement la vanne à pointeau, et arasé 15 secondes après dépose ;
■ Solide, après cristallisation.

Les densités sont indiquées au tableau suivant ; il n'y a pas de différence significative entre le $CO_2$ et le $N_2O$.

| Débit gaz (Ln/H) | Densité à la dépose (pot 135) | Densité "chunks" cristallisés |
|---|---|---|
| 65 | 807 | 870 |
| 97 | 580 | 730 |

Densités (g/l) obtenues selon le débit de gaz.

La différence de densité entre les pots 135 ml et les produits découpés ("chunks") s'explique notamment par le dégazage dû au rapport surface/volume défavorable des produits découpés, et par une moindre expansion à cause de leur refroidissement plus rapide au contact du tapis et dans le tunnel.

Exemple 4 :

Dans l'exemple 4, une pâte de type génoise consistante de composition suivante est utilisée :

| Farine : | 28% |
|---|---|
| Sucres et sirops : | 25% |
| Eau : | 23% |
| Matières grasses : | 10% |
| Glycérol : | 6% |
| Oeuf en poudre : | 5% |
| Poudres à lever : | 1% |
| Pectine : | 1% |
| Sel : | 0,5% |
| Emulsifiant : | 0,5%. |

La pâte est préparée par mélange progressif des ingrédients dans un pétrin, sous agitation modérée, selon les règles de l'homme de l'art. Après un temps de mélange de 10 minutes, une pâte visqueuse à température ambiante est obtenue, comme indiqué dans le tableau 5.

| | Limite d'écoul. (Pa) | Viscosité plastique β (Pa.s) | Indice de Consistance K (Pa.s$^n$) | Indice D'écoulement n (sans unité) |
|---|---|---|---|---|
| Casson $R^2=0,99669$ | 50,8 | 67,7 | – | – |
| Herschel – Bulkley $R^2=0,99679$ | 20 | – | 200 | 0,35 |

Tableau 5 : caractéristiques rhéologiques de la pâte utilisée en exemple 4 à 20°C.

La pâte est ensuite séparée en deux échantillons. Le premier échantillon est foisonné par injection d'air à l'aide d'un foisonneur dynamique Mondomix, avec les paramètres suivants : pression de gaz de 6,6 bars ; pression de la tête de foisonnement : 3 bars ; vitesse de tête : 300 tours/minute, débit d'air : 10 l/h ; débit de pâte : 16 kg/h. La densité minimale qui peut être obtenue par le foisonnement du Mondomix est de 0,55. En deçà, on observe un écoulement bouchon (dénommé pistonnage), montrant que la densité limite est atteinte.

Un autre échantillon est injecté par pompage dans le procédé selon l'invention, avec un débit de 25kg/h. Le gaz injecté est du dioxyde de carbone ($CO_2$) avec un débit de 40 l/h. La pression maximale dans le circuit est de 40 bars, le temps de séjour dans le circuit est de 3 minutes. Le circuit comporte en série les mélangeurs statiques suivants : 30 cm de Sulzer de DN 20, 70 cm de Kenics de DN20, 110 cm de Kenics de DN20 et 6 cm de Sulzer de DN10. La pression à la dépose est maintenue à 10 bars à l'aide d'une contre-pression à membrane ou d'une vanne à pointeau faisant fonction de contre-pression (freine fortement le débit, occasionnant une perte de charge importante).

Après dépose, les pâtes ont une densité de 0,45, donc sont significativement plus aérées qu'après mélange dynamique.

Après le foisonnement réalisé soit à l'aide du foisonneur dynamique Mondomix (témoin) soit selon l'invention (essai), la pâte est cuite en moule dans des conditions classiques de pâtisserie. Des produits moelleux sont obtenus, avec une alvéolation caractéristique de produit de pâtisserie (cf. tableau 6).

Les produits sont ensuite conservés en emballage étanche pour des tests de vieillissement. Après trois mois, le moelleux des produits est caractérisé à l'aide du protocole de compression indiqué. Les produits obtenus par le procédé selon l'invention sont moins denses (0,27 contre 0,35) et significativement plus moelleux (différence d'un facteur 2 sur les modules d'Young). L'alvéolation des produits est également différente, avec davantage de grandes alvéoles dans le procédé selon l'invention. Par contre, on ne note pas de différence de teneur en eau ou d'activité de l'eau des échantillons et l'amélioration du moelleux est donc totalement imputable au procédé d'aération. L'ensemble des résultats concernant l'exemple 4 sont récapitulés dans le tableau 6.

|  | Aération mécanique (Mondomix) | Aération statique (invention) |
|---|---|---|
| Viscosité plastique pâte | 67,7 | 67,7 |
| Seuil d'écoulement | 50,8 | 50,8 |
| Densité de la pâte | 0,55 | 0,45 |
| Densité du produit Après cuisson | 0,35 | 0,27 |
| Module d'Young (Pa) | 226 000 | 114 000 |
| D moyen | 1,0 | 1,3 |
| D 90 | 1,7 | 2,7 |
| Teneur en eau (%) | 20,5 | 20,0 |

Tableau 6 : récapitulatif des données de l'exemple 4.

Exemple 5 :

Dans l'exemple 5, une pâte consistante de composition suivante est utilisée :

| | |
|---|---|
| Farine : | 38% |
| Sucres et sirops : | 25% |
| Eau : | 18% |
| Matières grasses : | 10% |
| Oeufs entiers de coule fraîche : | 8% |
| Poudres à lever : | 1%. |

La pâte est préparée par mélange progressif des ingrédients dans un pétrin, sous agitation modérée, selon les règles de l'homme de l'art. Après un temps de mélange de 10 minutes, une pâte consistante à température ambiante est obtenue, comme indiquée dans le tableau 7.

|  | Limite d'écoul. (Pa) | Viscosité plastique $\beta$ (Pa.s) | Indice de Consistance K (Pa.s$^n$) | Indice D'écoulement n (sans unité) |
|---|---|---|---|---|
| Casson $R^2$=0,99328 | 89,3 | 54,2 | $-$ | $-$ |
| Herschel – Bulkley $R^2$=0,99265 | 70,4 | $-$ | 217,2 | 0,6 |

Tableau 7 : caractéristiques rhéologiques de la pâte utilisée en exemple 5.

Ce type de pâte est trop consistante pour être aérée dans un foisonneur dynamique. La pâte peut être par contre injectée par pompage dans le procédé selon l'invention, avec un débit de 30 kg/h. Le gaz injecté est du dioxyde de carbone (CO2) avec un débit de 43 l/h. La pression maximale dans le circuit est de 35 bars, le temps de séjour dans le circuit est de trois minutes. Le circuit comporte en série les mélangeurs statiques suivants : 30 cm de Sulzer de DN 20, 70 cm de Kenics de DN20, 110 cm de Kenics de DN20 et 6 cm de Sulzer de DN10. La pression à la dépose est maintenue à 12 bars à l'aide d'une contre-pression à membrane ou d'une vanne à pointeau faisant fonction de contre-pression (freine fortement le débit, occasionnant une perte de charge importante). En sortie de dépose, les pâtes ont une densité de 0,70.

Après le foisonnement réalisé à l'aide de l'invention, la pâte est cuite dans des conditions classiques. Des produits moelleux sont obtenus, avec une alvéolation caractéristique de produit de pâtisserie.

Les produits sont ensuite conservés en emballage étanche pour des tests de vieillissement. Après une semaine, le moelleux des produits est caractérisé selon le protocole de compression indiqué : Le module d'Young des produits foisonnés est de 226 000 Pa, contre 376 000 Pa pour les produits non foisonnés. De nouveau, l'utilisation du procédé » d'aération permet d'améliorer le moelleux de produits de pâtisserie.

**Revendications**

1. Procédé de fabrication d'un produit alimentaire aéré, par dispersion et/ou dissolution sous pression d'un gaz dans un produit alimentaire comportant au moins une matière grasse, puis détente pour produire une alvéolation **caractérisé en ce que** ladite dispersion et/ou dissolution a lieu à une pression relative comprise entre 8 et 50 bars à une température inférieure ou égale à 50°C dans une installation de mélange et de transport présentant au moins un mélangeur statique, ladite composition alimentaire présentant à ladite température une viscosité de Casson comprise entre 2 et 500 Pa.s, notamment entre 5 et 500 Pa.s, plus particulièrement entre 8 et 500 Pa.s ou bien encore entre 20 et 500 Pa.s, et une limite d'écoulement comprise entre 2 et 300 Pa, notamment entre 10 à 300 Pa, plus particulièrement entre 20 et 300 Pa ou entre 40 et 300 Pa, et **en ce qu'**il met en oeuvre une dépose du produit alimentaire alvéolé sous forme de produits individuels ou d'au moins une bande, dont la forme se conserve globalement tant qu'une force n'est pas appliquée.

2. Procédé selon la revendication 1, **caractérisé en ce que** ladite température est comprise entre 5°C et 50°C et plus particulièrement entre 10°C et 40°C.

3. Procédé selon une des revendications 1 ou 2, **caractérisé en ce que** ledit produit alimentaire est à base de chocolat.

4. Procédé selon la revendication 3, **caractérisé en ce que** ledit produit à base de chocolat présente une teneur pondérale en matière grasse comprise entre 22 % et 40 %.

5. Procédé selon une des revendications 3 ou 9, **caractérisé en ce que** ledit chocolat est déposé sous forme de produits individuels.

6. Procédé selon la revendication 5, **caractérisé en ce que** ladite dépose sous forme de produits individuels est réalisée à l'aide d'un doseur volumétrique, notamment pourvu d'un coupe-fil, ou bien à l'aide d'une vanne à pointeau.

7. Procédé selon un des revendications 5 ou 6, **caractérisé en ce que** lesdits produits individuels sont déposés sur ou dans des biscuits.

8. Procédé selon la revendication 7, **caractérisé en ce qu'**il présente une dépose de biscuits sur les produits individuels.

9. Procédé selon une des revendications 7 ou 8, **caractérisé en ce que** ladite dépose a lieu à une température telle que le chocolat n'est pas entièrement cristallisé de sorte que la cristallisation du chocolat permette une adhésion entre le chocolat alvéolé et le ou les biscuits.

10. Procédé selon une des revendications 3 ou 4, **caractérisé en ce que** le produit à base de chocolat est déposé sous forme d'une bande de largeur comprise entre 2 mm et 10 mm et de hauteur comprise entre 2 mm et 5 mm.

11. Procédé selon la revendication 10, **caractérisé en ce que**, de préférence après cristallisation du chocolat, ladite bande est découpée pour former des produits découpés de longueur comprise entre 5 mm et 15 mm.

**12.** Procédé selon une des revendications 3 à 11, **caractérisé en ce que** la cristallisation de la matière grasse contenue dans le produit est réalisée dans un tunnel de froid, à pression atmosphérique.

**13.** Procédé selon une des revendications 1 ou 2, **caractérisé en ce que** ledit produit alimentaire est une pâte crue à base de farine, notamment une génoise.

**14.** Procédé selon la revendication 13, **caractérisé en ce qu'**il présente, après dépose, une étape de cuisson de la pâte crue.

**15.** Produit alimentaire alvéolé comportant au moins une matière grasse après dépose et avant cuisson et/ou cristallisation et obtenu par un procédé selon une des revendications précédentes, **caractérisé en ce qu'**au moins 80% des alvéoles ont une dimension comprise entre 0,1 mm et 1,5 mm, au moins 30% des alvéoles ayant un diamètre supérieur à 0,2 mm, **en ce qu'**il présente une viscosité plastique de Casson comprise entre 4 Pa.s. et 1000 Pa.s notamment entre 10 et 1000 Pa.s, plus particulièrement entre 20 et 1000 Pa.s ou bien encore entre 40 et 1000 Pa.s et un seuil d'écoulement compris entre 10 Pa et 600 Pa notamment entre 20 et 600 Pa, plus particulièrement entre 40 et 600 Pa ou bien encore entre 80 et 600 Pa de sorte qu'il présente une forme qui se conserve tant qu'une force de compression n'est pas appliquée.

**16.** Produit alimentaire alvéolé selon la revendication 15, **caractérisé en ce que** 90% des alvéoles ont un diamètre inférieur à 1,6 mm.

**17.** Produit alimentaire alvéolé selon une des revendications 15 ou 16, **caractérisé en ce qu'**il est à base de chocolat et se présente sous la forme d'un produit à faces planes.

**18.** Produit alimentaire alvéolé selon des revendications 15 ou 16, **caractérisé en ce qu'**il est à base de chocolat et se présente sous forme d'une bande de largeur comprise entre 2 mm et 10 mm, et de hauteur comprise entre 2 mm et 5 mm, 90% des alvéoles ayant un diamètre inférieur à 0,5 mm.

**19.** Produit alimentaire alvéolé selon une des revendications 15 ou 16, **caractérisé en ce qu'**il est constitué d'une pâte crue, notamment une génoise texturée.

**20.** Produit alimentaire alvéolé à base de chocolat, **caractérisé en ce qu'**il est obtenu par découpe à partir d'une bande selon la revendication 18, pour former des produits découpés en chocolat alvéolés de longueur comprise entre 5mm et 15mm.

**21.** Produit alimentaire alvéolé obtenu par cuisson d'une pâte crue selon la revendication 19, **caractérisé en ce qu'**il est une génoise et présente une densité inférieure à 0,28 et un module d'Young inférieur à 130.000.

**22.** Produit alimentaire cristallisé alvéolé à base de chocolat obtenu à partir d'un produit suivant la revendication 15, **caractérisé en ce qu'**il présente une dimension maximale égale à 15 mm et une densité comprise entre 0,6 et 1,1, plus particulièrement entre 0,6 et 0,9 et de préférence entre 0,7 et 0,9.

**23.** Produit alimentaire alvéolé selon la revendication 22, **caractérisé en ce qu'**il est en forme générale de gouttelette.

**24.** Produit alimentaire alvéolé selon la revendication 23, **caractérisé en ce qu'**il présente une densité entre 0,7 et 0,9.

**25.** Produit alimentaire associant au moins un biscuit et un produit à base de chocolat cristallisé et présentant des faces planes, selon la revendication 17, **caractérisé en ce que** le produit à base de chocolat est alvéolé et présente une densité comprise entre 0,5 et 1,1, plus particulièrement entre 0,6 et 0,9 et de préférence entre 0,7 et 0,8.

**26.** Produit alimentaire selon la revendication 25, **caractérisé en ce que** ladite densité est choisie pour que le biscuit et ledit produit à base de chocolat aient des duretés égales ou voisines, de sorte qu'à la mastication, un consommateur perçoive peu de transition entre le biscuit et le produit à base de chocolat.

**27.** Produit alimentaire selon une des revendications 25 ou 26, **caractérisé en ce que** 80% des alvéoles ont une dimension comprise entre 0,1 mm et 1,5 mm, au moins 30% des alvéoles ayant un diamètre supérieur à 0,2 mm.

**28.** Produit alimentaire selon une des revendications 25 à 27, **caractérisé en ce que** le produit à base de chocolat est cristallisé.

29. Produit alimentaire selon une des revendications 25 à 28, **caractérisé en ce qu'**il comporte un dit produit alvéolé à base de chocolat disposé entre deux biscuits.

30. Procédé selon une des revendications 1 à 14, **caractérisé en ce que** ledit gaz comporte du $CO_2$.

31. Procédé selon une des revendications 1 à 14, **caractérisé en ce que** ledit gaz est un mélange d'un gaz soluble ($CO_2$ $NO_2$) et d'un gaz insoluble ($N_2$ et/ou $O_2$, air).

**Patentansprüche**

1. Verfahren zur Herstellung eines lufthaltigen Nahrungsmittels durch Verteilung und/oder Auflösung unter Druck eines Gases in einem Nahrungsmittel, das wenigstens ein Fett enthält, anschließend durch Druckminderung, um eine Hohlraumbildung zu bewirken, **dadurch gekennzeichnet, dass** die genannte Verteilung und/oder Auflösung unter einem Relativdruck zwischen 8 und 50 bar, bei einer Temperatur von kleiner oder gleich 50°C in einer Misch- und Förderanlage stattfindet, die wenigstens einen statischen Mischer aufweist, wobei die Nahrungsmittelzusammensetzung bei der genannten Temperatur eine Casson-Viskosität zwischen 2 und 500 Pa.s, insbesondere zwischen 5 und 500 Pa.s, weiterhin insbesondere zwischen 8 und 500 Pa.s oder aber zwischen 20 und 500 Pa.s, sowie eine Fließgrenze zwischen 2 und 300 Pa, insbesondere zwischen 10 und 300 Pa, weiterhin insbesondere zwischen 20 und 300 Pa oder zwischen 40 und 300 Pa aufweist, und dass es ein Ablegen des Hohlräume aufweisenden Nahrungsmittels in Form von einzelnen Produkten oder von wenigstens einem Streifen einsetzt, deren bzw. dessen Form sich im allgemeinen hält, solange keine Kraft angelegt wird.

2. Verfahren nach Anspruch 1, **dadurch gekennzeichnet, dass** die genannte Temperatur zwischen 5°C und 50°C und insbesondere zwischen 10°C und 40°C liegt.

3. Verfahren nach einem der Ansprüche 1 oder 2, **dadurch gekennzeichnet, dass** das genannte Nahrungsmittel auf der Basis von Schokolade ist.

4. Verfahren nach Anspruch 3, **dadurch gekennzeichnet, dass** das Produkt auf der Basis von Schokolade einen Gewichtsgehalt an Fett zwischen 22 % und 40 % aufweist.

5. Verfahren nach einem der Ansprüche 3 oder 4, **dadurch gekennzeichnet, dass** die Schokolade in Form von einzelnen Produkten abgelegt wird.

6. Verfahren nach Anspruch 5, **dadurch gekennzeichnet, dass** das Ablegen in Form von einzelnen Produkten mit Hilfe eines Mengen-Dosierapparates, der insbesondere mit einem Drahtschneider ausgestattet ist, bzw. mit Hilfe eines Nadelventils erfolgt.

7. Verfahren nach einem der Ansprüche 5 oder 6, **dadurch gekennzeichnet, dass** die einzelnen Produkte auf oder in Keksen abgelegt werden.

8. Verfahren nach Anspruch 7, **dadurch gekennzeichnet, dass** es ein Ablegen von Keksen auf den einzelnen Produkten aufweist.

9. Verfahren nach einem der Ansprüche 7 oder 8, **dadurch gekennzeichnet, dass** das Ablegen bei einer Temperatur erfolgt, die derart ist, dass die Schokolade nicht vollständig kristallisiert ist, so dass die Kristallisation der Schokolade ein Haften zwischen der Hohlräume aufweisenden Schokolade und dem oder den Keks(en) ermöglicht.

10. Verfahren nach einem der Ansprüche 3 oder 4, **dadurch gekennzeichnet, dass** das Produkt auf der Basis von Schokolade in Form eines Streifens mit einer Breite zwischen 2 mm und 10 mm und einer Höhe zwischen 2 mm und 5 mm abgelegt wird.

11. Verfahren nach Anspruch 10, **dadurch gekennzeichnet, dass** vorzugsweise nach der Kristallisation der Schokolade der genannte Streifen zugeschnitten wird, um zugeschnittene Produkte mit einer Länge zwischen 5 mm und 15 mm zu bilden.

**12.** Verfahren nach einem der Ansprüche 3 bis 11, **dadurch gekennzeichnet, dass** die Kristallisation des in dem Produkt enthaltenen Fettes in einem Kältetunnel unter atmosphärischem Druck erfolgt.

**13.** Verfahren nach einem der Ansprüche 1 oder 2, **dadurch gekennzeichnet, dass** das Nahrungsmittel eine Rohmasse auf Mehlbasis, insbesondere eine Biskuitmasse ist.

**14.** Verfahren nach Anspruch 13, **dadurch gekennzeichnet, dass** es nach dem Ablegen einen Schritt zum Backen der Rohmasse aufweist.

**15.** Hohlräume aufweisendes Nahrungsmittel, das nach dem Ablegen und vor dem Backen und/oder der Kristallisation wenigstens ein Fett enthält und das durch ein Verfahren nach einem der vorhergehenden Ansprüche erhalten wird, **dadurch gekennzeichnet, dass** wenigstens 80 % der Hohlräume eine Abmessung zwischen 0,1 mm und 1,5 mm, wenigstens 30 % der Hohlräume einen Durchmesser von über 0,2 mm aufweisen, dass es eine plastische Casson-Viskosität zwischen 4 Pa.s und 1000 Pa.s, insbesondere zwischen 10 und 1000 Pa.s, weiterhin insbesondere zwischen 20 und 1000 Pa.s oder aber zwischen 40 und 1000 Pa.s sowie einen Fließpunkt zwischen 10 Pa und 600 Pa, insbesondere zwischen 20 und 600 Pa, weiterhin insbesondere zwischen 40 und 600 Pa oder aber zwischen 80 und 600 Pa aufweist, so dass es eine Form aufweist, die sich hält, solange keine Druckkraft angelegt wird.

**16.** Hohlräume aufweisendes Nahrungsmittel nach Anspruch 15, **dadurch gekennzeichnet, dass** 90 % der Hohlräume einen Durchmesser von unter 1,6 mm aufweisen.

**17.** Hohlräume aufweisendes Nahrungsmittel nach einem der Ansprüche 15 oder 16, **dadurch gekennzeichnet, dass** es auf der Basis von Schokolade ist und dass es in Form eines Produktes mit ebenen Flächen vorliegt.

**18.** Hohlräume aufweisendes Nahrungsmittel nach einem der Ansprüche 15 oder 16, **dadurch gekennzeichnet, dass** es auf der Basis von Schokolade ist und in Form eines Streifens vorliegt, der eine Breite zwischen 2 mm und 10 mm und eine Höhe zwischen 2 mm und 5 mm aufweist, wobei 90 % der Hohlräume einen Durchmesser von unter 0,5 mm aufweisen.

**19.** Hohlräume aufweisendes Nahrungsmittel nach einem der Ansprüche 15 oder 16, **dadurch gekennzeichnet, dass** es aus einer Rohmasse, insbesondere einer strukturierten Biskuitmasse besteht.

**20.** Hohlräume aufweisendes Nahrungsmittel auf der Basis von Schokolade, **dadurch gekennzeichnet, dass** es durch Zuschneiden aus einem Streifen nach Anspruch 18 erhalten wird, um zugeschnittene, Hohlräume aufweisende Schokoladenprodukte mit einer Länge zwischen 5 mm und 15 mm zu bilden.

**21.** Hohlräume aufweisendes Nahrungsmittel, das durch Backen einer Rohmasse nach Anspruch 19 erhalten wird, **dadurch gekennzeichnet, dass** es eine Biskuitmasse ist und eine Dichte von unter 0,28 sowie ein Young-Modul von unter 130.000 aufweist.

**22.** Kristallisiertes, Hohlräume aufweisendes Nahrungsmittel auf der Basis von Schokolade, das aus einem Produkt nach Anspruch 15 erhalten wird, **dadurch gekennzeichnet, dass** es eine maximale Abmessung von gleich 15 mm und eine Dichte zwischen 0,6 und 1,1, insbesondere zwischen 0,6 und 0,9 und vorzugsweise zwischen 0,7 und 0,9 aufweist.

**23.** Hohlräume aufweisendes Nahrungsmittel nach Anspruch 22, **dadurch gekennzeichnet, dass** es allgemein tröpfchenförmig ausgebildet ist.

**24.** Hohlräume aufweisendes Nahrungsmittel nach Anspruch 23, **dadurch gekennzeichnet, dass** es eine Dichte aufweist, die zwischen 0,7 und 0,9 liegt.

**25.** Nahrungsmittel, das wenigstens einen Keks und ein Produkt auf der Basis von kristallisierter Schokolade mit ebenen Flächen nach Anspruch 17 verbindet, **dadurch gekennzeichnet, dass** das Produkt auf der Basis von Schokolade Hohlräume aufweist und eine Dichte hat, die zwischen 0,5 und 1,1, insbesondere zwischen 0,6 und 0,9 und vorzugsweise zwischen 0,7 und 0,8 liegt.

**26.** Nahrungsmittel nach Anspruch 25, **dadurch gekennzeichnet, dass** die genannte Dichte gewählt ist, damit der Keks und das Produkt auf der Basis von Schokolade gleiche oder nahe gelegene Härten aufweisen, so dass ein Verbraucher beim Kauen wenig Übergang zwischen dem Keks und dem Produkt auf der Basis von Schokolade spürt.

27. Nahrungsmittel nach einem der Ansprüche 25 oder 26, **dadurch gekennzeichnet, dass** 80 % der Hohlräume eine Abmessung zwischen 0,1 mm und 1,5 mm, wenigstens 30 % der Hohlräume einen Durchmesser von über 0,2 mm aufweisen.

28. Nahrungsmittel nach einem der Ansprüche 25 bis 27, **dadurch gekennzeichnet, dass** das Produkt auf der Basis von Schokolade kristallisiert wird.

29. Nahrungsmittel nach einem der Ansprüche 25 bis 28, **dadurch gekennzeichnet, dass** es ein sogenanntes Hohlräume aufweisendes Produkt auf der Basis von Schokolade umfasst, das zwischen zwei Keksen angeordnet ist.

30. Verfahren nach einem der Ansprüche 1 bis 14, **dadurch gekennzeichnet, dass** das genannte Gas $CO_2$ umfasst.

31. Verfahren nach einem der Ansprüche 1 bis 14, **dadurch gekennzeichnet, dass** das genannte Gas eine Mischung aus einem löslichen Gas ($CO_2$, $NO_2$) und aus einem unlöslichen Gas ($N_2$ und/oder $O_2$, Luft) ist.

## Claims

1. Method for producing an aerated food product by dispersing and/or dissolving under pressure a gas in a food product which comprises at least one fatty material, then reducing pressure in order to produce a honeycomb effect, **characterised in that** the dispersion and/or the dissolution take(s) place at a relative pressure of between 8 and 50 bar at a temperature less than or equal to 50°C in a mixing and transport installation having at least one static mixer, the food composition having, at that temperature, a Casson viscosity of between 2 and 500 Pa.s, in particular between 5 and 500 Pa.s, more particularly between 8 and 500 Pa.s, or between 20 and 500 Pa.s, and a yield point of between 2 and 300 Pa, in particular from 10 to 300 Pa, more particularly between 20 and 300 Pa, or between 40 and 300 Pa, and **in that** it involves depositing the honeycombed food product in the form of individual products or at least one strip whose shape is generally retained as long as a force is not applied.

2. Method according to claim 1, **characterised in that** the temperature is between 5°C and 50°C, and more particularly between 10°C and 40°C.

3. Method according to either claim 1 or claim 2, **characterised in that** the food product is chocolate-based.

4. Method according to claim 3, **characterised in that** the chocolate-based product has a fatty material content by weight of between 22% and 40%.

5. Method according to either claim 3 or claim 4, **characterised in that** the chocolate is deposited in the form of individual products.

6. Method according to claim 5, **characterised in that** the depositing in the form of individual products is carried out using a volumetric metering device, in particular provided with a strand cutter, or using a needle valve.

7. Method according to either claim 5 or claim 6, **characterised in that** the individual products are deposited on or in biscuits.

8. Method according to claim 7, **characterised in that** it involves depositing biscuits on the individual products.

9. Method according to either claim 7 or claim 8, **characterised in that** the depositing takes place at such a temperature that the chocolate is not entirely crystallised so that the crystallisation of the chocolate allows adhesion between the honeycombed chocolate and the biscuit(s).

10. Method according to either claim 3 or claim 4, **characterised in that** the chocolate-based product is deposited in the form of a strip having a width of between 2 mm and 10 mm and a height of between 2 mm and 5 mm.

11. Method according to claim 10, **characterised in that**, preferably after crystallisation of the chocolate, the strip is cut in order to form cut products having a length of between 5 mm and 15 mm.

**12.** Method according to any one of claims 3 to 11, **characterised in that** the crystallisation of the fatty material contained in the product is carried out in a cooling tunnel, at atmospheric pressure.

**13.** Method according to either claim 1 or claim 2, **characterised in that** the food product is a raw flour-based dough, in particular a sponge.

**14.** Method according to claim 13, **characterised in that** it comprises, after depositing, a step for baking the raw dough.

**15.** Honeycombed food product comprising at least one fatty material after depositing and before baking and/or crystallisation, and produced using a method according to any one of the preceding claims, **characterised in that** at least 80% of the cells have a dimension of between 0.1 mm and 1.5 mm, at least 30% of the cells having a diameter greater than 0.2 mm, **in that** it has a plastic Casson viscosity of between 4 Pa.s. and 1000 Pa.s, in particular between 10 and 1000 Pa.s, more particularly between 20 and 1000 Pa.s, or between 40 and 1000 Pa.s, and a yield point of between 10 Pa and 600 Pa, in particular between 20 and 600 Pa, more particularly between 40 and 600 Pa, or between 80 and 600 Pa so that it has a shape which is preserved as long as a compression force is not applied.

**16.** Honeycombed food product according to claim 15, **characterised in that** 90% of the cells have a diameter of less than 1.6 mm.

**17.** Honeycombed food product according to either claim 15 or claim 16, **characterised in that** it is chocolate-based and is in the form of a product having planar faces.

**18.** Honeycombed food product according to either claim 15 or claim 16, **characterised in that** it is chocolate-based and is in the form of a strip having a width of between 2 mm and 10 mm, and a height of between 2 mm and 5 mm, 90% of the cells having a diameter of less than 0.5 mm.

**19.** Honeycombed food product according to either claim 15 or claim 16, **characterised in that** it is constituted by a raw dough, in particular a textured sponge.

**20.** Honeycombed chocolate-based food product, **characterised in that** it is obtained by means of being cut from a strip according to claim 18, in order to form cut honeycombed chocolate products having a length of between 5 mm and 15 mm.

**21.** Honeycombed food product obtained by baking a raw dough according to claim 19, **characterised in that** it is a sponge and has a density of less than 0.28 and a Young's modulus of less than 130,000.

**22.** Honeycombed, crystallised, chocolate-based food product obtained from a product according to claim 15, **characterised in that** it has a maximum dimension of 15 mm and a density of between 0.6 and 1.1, more particularly between 0.6 and 0.9 and preferably between 0.7 and 0.9.

**23.** Honeycombed food product according to claim 22, **characterised in that** it is generally in the form of a droplet.

**24.** Honeycombed food product according to claim 23, **characterised in that** it has a density of between 0.7 and 0.9.

**25.** Food product associating at least a biscuit and a crystallised chocolate-based product and having planar faces, according to claim 17, **characterised in that** the chocolate-based product is honeycombed and has a density of between 0.5 and 1.1, more particularly between 0.6 and 0.9, and preferably between 0.7 and 0.8.

**26.** Food product according to claim 25, **characterised in that** the density is selected so that the biscuit and the chocolate-based product have levels of hardness which are equal or similar so that, during chewing, a consumer perceives little change between the biscuit and the chocolate-based product.

**27.** Food product according to either claim 25 or claim 26, **characterised in that** 80% of the cells have a dimension of between 0.1 mm and 1.5 mm, at least 30% of the cells having a diameter greater than 0.2 mm.

**28.** Food product according to any one of claims 25 to 27, **characterised in that** the chocolate-based product is crystallised.

**29.** Food product according to any one of claims 25 to 28, **characterised in that** it comprises a honeycombed chocolate-based product which is arranged between two biscuits.

**30.** Method according to any one of claims 1 to 14, **characterised in that** the gas comprises $CO_2$.

**31.** Method according to any one of claims 1 to 14, **characterised in that** the gas is a mixture of a soluble gas ($CO_2$, $NO_2$) and an insoluble gas ($N_2$ and/or $O_2$, air) .

Défoisonnement - Détempérage

DD

Retour
excès

TEMP

10

C

VI

STMX

15

STMX

STMX

DET

50

Contre-
pression

HPP

11

20

MA

DEP

30

3'

3

5

5

3

2

3

1

3

## FIG.1a

11

VAN
DEP

6

DEC

7

2

8

8

6

2

## FIG.1b

Position I

Position II

Position III

**FIG.2a**

**FIG.2b**

**FIG.2c**

FIG.3

FIG.4a

**Coupe transversale**

moyenne : 0.74 mm
D90 : 1.6 mm

Classes (diamètre équivalent)
(en mm)

FIG.4b

**Coupe longitudinale**

moyenne : 0.56 mm
D90 : 1.2 mm

Classes (diamètre équivalent)
(en mm)

FIG.4c

FIG.5a

Coupe longitudinale

moyenne : 0,60 mm
D90 : 1.4 mm

Classes (diamètre équivalent)

FIG.5b

FIG.6a

**Coupe longitudinale**

moyenne : 0.2 mm
D90 : 0.5 mm

Classes (diamètre équivalent) en mm

FIG.6b

FIG.7a

FIG.7b